(19) Europäisches Patentamt
European Patent Office
Office européen des brevets

(11) EP 2 312 855 A2

(12) EUROPEAN PATENT APPLICATION

(43) Date of publication:
20.04.2011 Bulletin 2011/16

(51) Int Cl.:
*H04N 7/26* (2006.01)

(21) Application number: 10177300.0

(22) Date of filing: 17.09.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 24.09.2009 JP 2009219628

(71) Applicant: Sony Corporation
Tokyo 108-0075 (JP)

(72) Inventors:
• Fukuhara, Takahiro
Tokyo 108-0075 (JP)
• Hosaka, Kazuhisa
Tokyo 108-0075 (JP)
• Inagaki, Tsuguna
Kanagawa (JP)

(74) Representative: Körber, Martin Hans
Mitscherlich & Partner
Patent- und Rechtsanwälte
Sonnenstraße 33
80331 München (DE)

(54) **Low delay scalable image coding**

(57) An image processing device including: selecting section configured to select coded data corresponding to coefficient data of a subband necessary to generate a decoded image of a predetermined resolution from coded data generated by coding a line block including a coefficient data group of each subband, the line block being generated by decomposing image data of a predetermined number of lines into each frequency band by hierarchical analysis filter processing and including at least one line or more of coefficient data of a subband of a lowest-frequency component; decoding section configured to decode the coded data selected by the selecting means; and synthesis filter section configured to hierarchically perform synthesis filter processing, synthesize the coefficient data obtained by decoding the coded data by the decoding means, and generate the decoded image of the predetermined resolution.

FIG.1

EP 2 312 855 A2

**Description**

BACKGROUND OF THE INVENTION

1. Field of the Invention

The present invention relates to an image processing device and an image processing method, and particularly to an image processing device and an image processing method that can decode coded data obtained by coding an image with a low delay and in a scalable manner.

2. Description of the Related Art

Typical image compression systems hither to known include JPEG (Joint Photographic Experts Group) and JPEG2000 standardized by the ISO (International Standards Organization).

Research has recently been actively conducted into systems that divide an image into a plurality of bands by a filter combining a high-pass filter and a low-pass filter, which filter is referred to as a filter bank, and which perform coding in each band. Among the systems, wavelet transform coding, which is free from block distortion in high compression which distortion is a problem of a DCT (Discrete Cosine Transform), is considered to be promising as a novel technique to replace the DCT.

JPEG2000, whose international standardization was completed in January 2001, employs a system combining this wavelet transform and highly efficient entropy coding (bit modeling in bit plane units and arithmetic coding), and achieves a significant improvement in coding efficiency over JPEG

This JPEG2000 is also selected as a standard codec for digital cinema standards (DCI (Digital Cinema Initiative) standards), and has begun to be used for compression of moving images such as movies and the like. In addition, various manufacturers have started marketing products as applications of JPEG2000 to monitoring cameras, news gathering cameras for broadcasting stations, security recorders and the like.

However, JPEG2000 basically codes and decodes picture units, and therefore causes a delay of at least one picture in coding and a delay of at least one picture in decoding when a low delay is to be achieved in order to use JPEG2000 for real-time transmission and reception.

This is true not only for JPEG2000 but also for any codec such as AVC (Advanced Video Coding)-Intra, JPEG and the like. However, means for shortening a delay time by dividing a screen into a number of rectangular slices or tiles and encoding and decoding the rectangular slices or tiles independently of each other has recently been proposed (see Japanese Patent Laid-Open No. 2007-311924, for example).

SUMMARY OF THE INVENTION

However, this method cannot perform scalable decoding, which obtains a target resolution or image quality by extracting only a part of one coded code stream which part corresponds to a plurality of resolutions or a plurality of image qualities from the coded code stream and decoding the part of the coded code stream as in common JPEG2000.

The present invention has been proposed in view of such a situation. It is desirable to decode coded data obtained by coding an image with a low delay and in a scalable manner.

Various respective aspects and features of the invention are defined in the enclosed claims. According to an embodiment of the present invention, there is provided an image processing device including: selecting means for selecting coded data corresponding to coefficient data of a subband necessary to generate a decoded image of a predetermined resolution from coded data generated by coding a line block including a coefficient data group of each subband, the line block being generated by decomposing image data of a predetermined number of lines into each frequency band by hierarchical analysis filter processing and including at least one line or more of coefficient data of a subband of a lowest-frequency component; decoding means for decoding the coded data selected by the selecting means; and synthesis filter means for hierarchically performing synthesis filter processing, synthesizing the coefficient data obtained by decoding the coded data by the decoding means, and generating the decoded image of the predetermined resolution.

The image processing device further includes decrypting means for decrypting the coded data, wherein the selecting means can divide the coded data into each piece of coded data corresponding to one line of the coefficient data in each layer on a basis of a result of decryption by the decrypting means, and select coded data corresponding to coefficient data of a subband necessary to generate a decoded image of a predetermined resolution from the divided coded data.

The decrypting means can extract information on a code amount of coded data corresponding to one line of the coefficient data in each layer, the information being included in the coded data, by decrypting the coded data, and the selecting means can divide the coded data into each piece of coded data corresponding to one line of the coefficient data in each layer on a basis of the code amount, and select coded data corresponding to coefficient data of a subband necessary to generate a decoded image of a predetermined resolution from the divided coded data.

The decrypting means can detect a marker indicating a boundary of coded data corresponding to one line of the coefficient data in each layer, the marker being included in the coded data, by decrypting the coded data, and the selecting means can divide the coded data into each piece of coded data corresponding to one line of the coefficient data in each layer on a basis of a result of detection of the marker, and select coded data corresponding to coefficient data of a subband necessary to generate a decoded image of a predetermined resolution from the divided coded data.

The image processing device further includes coefficient data rearranging means for rearranging order of arrangement of the coefficient data obtained by decoding the coded data by the decoding means from order in which the coded data is decoded by the decoding means to order in which to subject the coefficient data to the synthesis filter processing, wherein the synthesis filter means can synthesize the coefficient data of each subband, the coefficient data being rearranged by the coefficient data rearranging means, and generate the decoded image of the predetermined resolution.

The synthesis filter means can perform the synthesis filter processing on coefficient data of a subband in a lower layer preferentially among layers in which the synthesis filter processing can be performed. The synthesis filter means can perform the synthesis filter processing by using a lifting operation. The synthesis filter means can perform the lifting operation on a line block in an initial state after symmetrically extending necessary coefficient data, and perform the lifting operation on a line block in a steady state using a result of the lifting operation performed last time.

The synthesis filter means can perform the lifting operation on the coefficient data in a horizontal direction, and then perform the lifting operation on the coefficient data in a vertical direction.

According to another embodiment of the present invention, there is provided an image processing method including the steps of: selecting means of an image processing device selecting coded data corresponding to coefficient data of a subband necessary to generate a decoded image of a predetermined resolution from coded data generated by coding a line block including a coefficient data group of each subband, the line block being generated by decomposing image data of a predetermined number of lines into each frequency band by hierarchical analysis filter processing and including at least one line or more of coefficient data of a subband of a lowest-frequency component; decoding means of the image processing device decoding the selected coded data; and synthesis filter means of the image processing device hierarchically performing synthesis filter processing, synthesizing the coefficient data obtained by decoding the coded data, and generating the decoded image of the predetermined resolution.

In one embodiment of the present invention, coded data corresponding to coefficient data of a subband necessary to generate a decoded image of a predetermined resolution is selected from coded data generated by coding a line block including a coefficient data group of each subband, the line block being generated by decomposing image data of a predetermined number of lines into each frequency band by hierarchical analysis filter processing and including at least one line or more of coefficient data of a subband of a lowest-frequency component, the selected coded data is decoded, synthesis filter processing is performed hierarchically, the coefficient data obtained by decoding the coded data is synthesized, and the decoded image of the predetermined resolution is generated. According to the embodiments of the present invention, it is possible to decode an image. It is possible, in particular, to decode coded data obtained by coding an image with a low delay and in a scalable manner.

BRIEF DESCRIPTION OF THE DRAWINGS

Embodiments of the invention will now be described with references to the accompanying drawings, in which

FIG. 1 is a block diagram showing an example of main configuration of an image coding device;
FIG. 2 is a diagram of assistance in explaining subbands and a line block;
FIG. 3 is a diagram showing an example of a 5 × 3 filter;
FIG. 4 is a diagram of assistance in explaining an example of lifting operation;
FIG. 5 is a diagram of assistance in explaining processing states of analysis filtering;
FIG. 6 is a diagram of assistance in explaining processing states of analysis filtering;
FIG. 7 is a diagram of assistance in explaining processing states of analysis filtering;
FIG. 8 is a diagram of assistance in explaining processing states of analysis filtering;
FIG. 9 is a diagram of assistance in explaining an example of order of output of coefficient data;
FIG. 10 is a diagram of assistance in explaining an order of output of coefficient data;
FIG. 11 is a diagram of assistance in explaining rearrangement of coefficient data;
FIG. 12 is a diagram of assistance in explaining an example of addition of header information;
FIG. 13 is a flowchart of assistance in explaining an example of a flow of a coding process;
FIG. 14 is a block diagram showing an example of main configuration of an image decoding device to which the present invention is applied;

FIG. 15 is a diagram showing an example of partial decoding;

FIGS. 16A to 16E are diagrams of assistance in explaining an example of patterns of scalable decoding;

FIG. 17 is a diagram of assistance in explaining an example of lifting operation;

FIG. 18 is a diagram of assistance in explaining a processing state of synthesis filtering;

FIG. 19 is a diagram of assistance in explaining an example of processing order of coefficient data;

FIGS. 20A, 20B, and 20C are diagrams of assistance in explaining an example of states of picture conversion processing;

FIG. 21 is a flowchart of assistance in explaining an example of a flow of a decoding process;

FIG. 22 is a diagram of assistance in explaining an example of addition of markers;

FIG. 23 is a block diagram showing another example of configuration of an image decoding device to which an embodiment of the present invention is applied;

FIGS. 24A and 24B are diagrams of assistance in explaining rearrangement of coefficient data;

FIGS. 25A and 25B are diagrams of assistance in explaining rearrangement of coefficient data;

FIG. 26 is a flowchart of assistance in explaining an example of a flow of a decoding process;

FIG. 27 is a block diagram showing an example of main configuration of an image transmission system to which an embodiment of the present invention is applied; and

FIG. 28 is a block diagram showing an example of main configuration of a personal computer to which an embodiment of the present invention is applied.

DETAILED DESCRIPTION OF THE PREFERRED EMBODIMENTS

A mode for carrying out the invention (hereinafter referred to as embodiments) will hereinafter be described. Incidentally, description will be made in the following order.

1. First Embodiment (Image Decoding Device)
2. Second Embodiment (Another Example of Configuration of Image Decoding Device)
3. Third Embodiment (Transmission System)
4. Fourth Embodiment (Personal Computer)

<1. First Embodiment>

[Description of Image Coding Device]

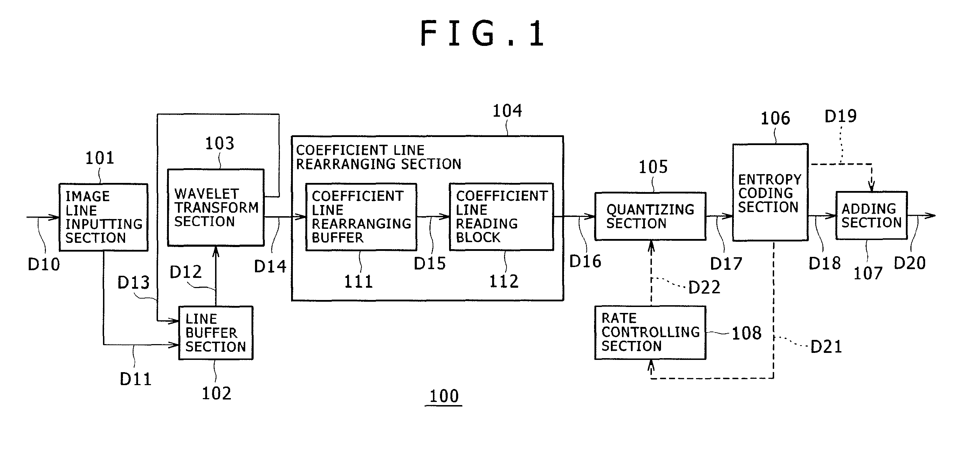

Description will first be made of an image coding device corresponding to an image decoding device as an image processing device to which an embodiment of the present invention is applied. The image decoding device to be described later can scalably decode coded data, and thereby obtain a decoded image of a desired resolution. The image coding device 100 shown in FIG. 1 codes image data, and thereby generates coded data decodable by such an image decoding device.

The image coding device in FIG. 1 includes an image line inputting section 101, a line buffer section 102, a wavelet transform section 103, a coefficient line rearranging section 104, a quantizing section 105, an entropy coding section 106, an adding section 107, and a rate controlling section 108.

The image line inputting section 101 supplies input image data (arrow D10) to the line buffer section 102 (arrow D11) line by line to store the input image data in the line buffer section 102. The line buffer section 102 retains the image data supplied from the image line inputting section 101 and coefficient data supplied from the wavelet transform section 103, and supplies the image data and the coefficient data to the wavelet transform section 103 in predetermined timing (arrow D12).

The wavelet transform section 103 subjects the image data and the coefficient data supplied from the line buffer section 102 to a wavelet transform to generate coefficient data of a low-frequency component and a high-frequency component of a next layer. Details of the wavelet transform will be described later.

The wavelet transform section 103 supplies a component of low frequency in a vertical direction and a horizontal direction of the generated coefficient data to the line buffer section 102 and makes the line buffer section 102 retain the low-frequency component (arrow D13), and supplies other components to the coefficient line rearranging section 104 (arrow D14). Incidentally, when the generated coefficient data is in a highest layer, the wavelet transform section 103 also supplies the component of low frequency in the vertical direction and the horizontal direction to the coefficient line rearranging section 104.

The coefficient line rearranging section 104 is supplied with the coefficient data (coefficient line) from the wavelet transform section 103 (arrow D14). The coefficient line rearranging section 104 rearranges the order of the coefficient data (coefficient line) into the order of wavelet inverse transform processing.

As shown in FIG. 1, the coefficient line rearranging section 104 includes a coefficient line rearranging buffer 111 and a coefficient line reading block 112. The coefficient line rearranging buffer 111 retains coefficient lines supplied from the wavelet transform section 103. The coefficient line reading block 112 performs rearrangement by reading the coefficient lines retained in the coefficient line rearranging buffer I I in the order of wavelet inverse transform processing (arrow D 15). Details of the rearrangement will be described later.

The coefficient line rearranging section 104 (coefficient line reading block 112) supplies the coefficient data in the rearranged order to the quantizing section 105 (arrow D16).

The quantizing section 105 quantizes the coefficient data supplied from the coefficient line rearranging section 104. Any method may be used as a method for the quantization. For example, it suffices to use an ordinary method, or a method of dividing coefficient data W by a quantization step size Q as expressed in the following Equation (1).

$$\text{Quantized Coefficient} = W/Q \ \dots(1)$$

Incidentally, this quantization step size Q is specified by the rate controlling section 108. The quantizing section 105 supplies the quantized coefficient data to the entropy coding section 106 (arrow D17).

The entropy coding section 106 codes the coefficient data supplied from the quantizing section 105 by a predetermined entropy coding system such for example as Huffman coding or arithmetic coding. The entropy coding section 106 codes one coefficient line, and then supplies one code line as coded data generated from the one coefficient line to the adding section 107 (arrow D 18). The entropy coding section 106 further supplies the code amount of the one code line to the adding section 107 (dotted line arrow D 19).

The adding section 107 adds the code amount of the one code line which code amount is supplied from the entropy coding section 106 as header information to the one code line supplied from the same entropy coding section 106. Details of the addition of the header information will be described later. After adding the header information, the adding section 107 outputs the coded data (code line) to the outside of the image coding device 100 (arrow D20). The coded data output to the outside of the image coding device 100 is supplied to the image decoding device to be described later via for example a network and the like.

This coded data is rearranged in the order of a wavelet inverse transform by the coefficient line rearranging section 104. Thereby, for example, a delay time of decoding processing by the image decoding device can be reduced.

Incidentally, the entropy coding section 106 also supplies the code amount of each code line to the rate controlling section 108 (dotted line arrow D21).

The rate controlling section 108 estimates a degree of difficulty in coding the image on the basis of the code amount of each code line which code amount is supplied from the entropy coding section 106, and specifies the quantization step size Q used by the quantizing section 105 according to the degree of difficulty in the coding (dotted line arrow D22). That is, the rate controlling section 108 controls the rate of the coded data by specifying the quantization step size Q.

[Description of Subbands]

Description will next be made of the wavelet transform performed by the image coding device 100.

The wavelet transform is a process of converting image data into coefficient data of each frequency component formed hierarchically by recursively repeating analysis filtering that divides the image data into a component of high spatial frequency (high-frequency component) and a component of low spatial frequency (low-frequency component). Incidentally, in the following, the layer of a high-frequency component is a lower division level, and the layer of a low-frequency component is a higher division level.

In one layer (division level), analysis filtering is performed in both the horizontal direction and the vertical direction. Analysis filtering in the horizontal direction is performed first, and analysis filtering in the vertical direction is performed next. Thus, the coefficient data (image data) of one layer is divided into four subbands (LL, LH, HL, and HH) by analysis filtering for one layer. Then, analysis filtering in a next layer is performed on a component of low frequency (LL) in both the horizontal direction and the vertical direction among the four generated subbands.

Thus repeating analysis filtering recursively can drive coefficient data in a low spatial frequency band into a smaller region. Thus, efficient coding can be performed by coding the thus wavelet transformed coefficient data.

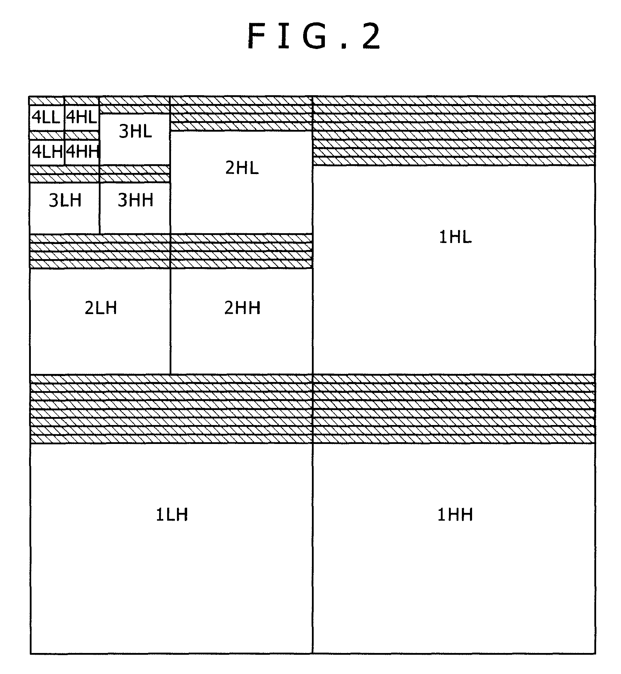

FIG. 2 is a diagram of assistance in explaining a configuration of coefficient data generated by repeating analysis filtering four times.

When analysis filtering at a division level 1 is performed on baseband image data, the image data is converted into four subbands (1LL, 1LH, 1HL, and 1HH) at the division level 1. The subband 1LL of a low-frequency component in both the horizontal direction and the vertical direction at the division level 1 is subjected to analysis filtering at a division level 2, and thereby converted into four subbands (2LL, 2LH, 2HL, and 2HH) at the division level 2. The subband 2LL of a low-frequency component in both the horizontal direction and the vertical direction at the division level 2 is subjected to analysis filtering at a division level 3, and thereby converted into four subbands (3LL, 3LH, 3HL, and 3HH) at the division level 3. The subband 3LL of a low-frequency component in both the horizontal direction and the vertical direction at the division level 3 is subjected to analysis filtering at a division level 4, and thereby converted into four subbands (4LL, 4LH, 4HL, and 4HH) at the division level 4.

FIG. 2 shows the configuration of the coefficient data thus divided into 13 subbands.

Analysis filtering as described above generates one line of coefficient data of each of four subbands in a next higher layer from two lines of image data or coefficient data as a processing object. Thus, as indicated by hatched parts in FIG. 2, to generate one line of coefficient data of each of subbands at the division level 4 needs two lines of the subband 3LL, four lines of the subband 2LL, and eight lines of the subband 1LL. That is, 16 lines of image data is necessary.

A number of lines of image data necessary to generate one line of coefficient data of a subband of such a lowest-frequency component will be referred to as a line block (or a precinct). A line block also indicates a set of coefficient data of each subband obtained by wavelet transforming image data of the line block.

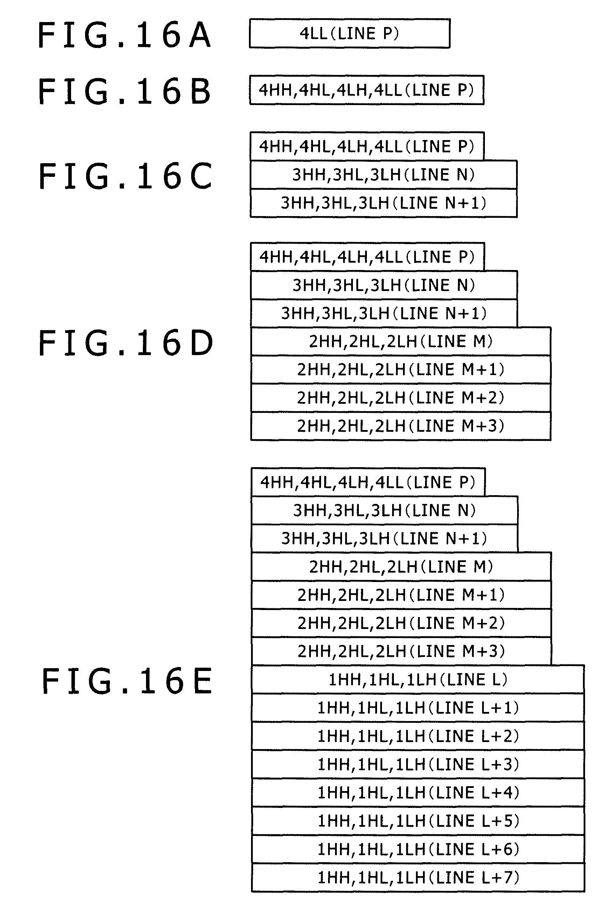

For example, in the example of FIG. 2, 16 lines of image data not shown in the figure forms one line block. The line block can also indicate 8 lines of coefficient data of each subband at the division level 1, 4 lines of coefficient data of each subband at the division level 2, 2 lines of coefficient data of each subband at the division level 3, and 1 line of coefficient data of each subband at the division level 4, the coefficient data being generated from the 16 lines of image data.

It can also be said that the wavelet transform section 103 performs a wavelet transform for each such line block.

A line in this case represents one row within a picture or a field corresponding to image data before a wavelet transform, within a division level, or within each subband.

This one line of coefficient data (image data) will be referred to also as a coefficient line. The expression will be changed as appropriate when description needs to be made with a finer distinction.

For example, one certain line of a certain subband will be referred to as a "coefficient line of a certain subband," and one line of all subbands (LH, HL, and HH (including LL in the case of a highest layer)) in a certain layer (division level), which line is generated from two identical coefficient lines in a next lower layer, will be referred to as a "coefficient line at a certain division level (or layer)."

In the example of FIG. 2, a "coefficient line at the division level 4 (highest layer)" represents one certain line of the subband 4LL, one certain line of the subband 4LH, one certain line of the subband 4HL, and one certain line of the subband 4HH, which lines correspond to each other (are generated from identical coefficient lines at a next lower division level). A "coefficient line at the division level 3" represents one certain line of the subband 3LH, one certain line of the subband 3HL, and one certain line of the subband 3HH, which lines correspond to each other. Further, a "coefficient line of the subband 2HH" represents a certain line of the subband 2HH.

Incidentally, one line of coded data obtained by coding one coefficient line (one line of coefficient data) will be referred to also as a code line.

A wavelet transform at the division level 4 has been described with reference to FIG. 2. Description in the following will basically be made supposing that a wavelet transform is performed up to the division level 4. In practice, however, the number of layers (division levels) of a wavelet transform is arbitrary.

[Lifting Operation]

The wavelet transform section 103 generally performs processing as follows using a filter bank composed of a low-frequency filter and a high-frequency filter. Incidentally, a digital filter generally has an impulse response of a length of a plurality of taps, that is, filter coefficients, and therefore input image data or coefficient data enough to perform filter processing needs to be buffered in advance.

Also in a case of performing a wavelet transform over multiple stages, a number of wavelet transform coefficients generated in a previous stage which number is enough to perform filter processing need to be buffered.

As a concrete example of the wavelet transform, a method using a $5 \times 3$ filter will be described. The method using the $5 \times 3$ filter is also adopted by JPEG (Joint Photographic Experts Group) 2000 standards already described in the known art, and is an excellent method in that a wavelet transform can be performed with a small number of filter taps.

The impulse response (z-transform representation) of the $5 \times 3$ filter is formed from a low-frequency filter $H_0$ (z) and a high-frequency filter $H_1(z)$, as shown in the following Equation (2) and Equation (3). Equation (2) and Equation (3) show that the low-frequency filter $H_0(z)$ is a five-tap filter and that the high-frequency filter $H_1(z)$ is a three-tap filter.

$$H_0(z) = (-1 + 2^{z-1} + 6^{z-2} + 2^{z-3} - z^{-4}) / 8 \ \dots (2)$$

$$H_1(z) = (-1 + 2^{z-1} - z^{-2}) \dots (3)$$

According to Equation (2) and Equation (3), the coefficients of a low-frequency component and a high-frequency component can be calculated directly. In this case, the calculation of filter processing can be reduced by using a lifting technique.

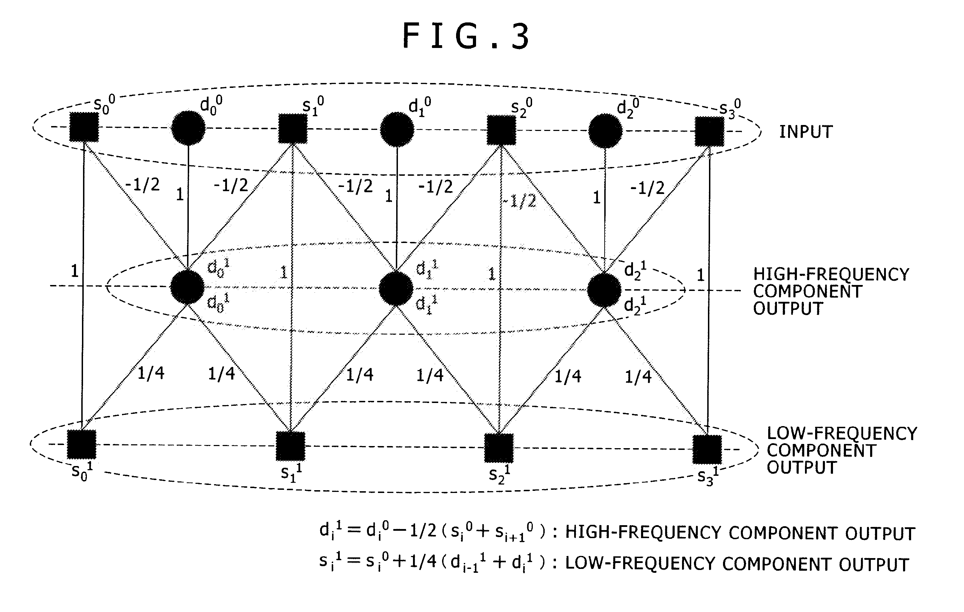

FIG. 3 is a diagram showing a lifting representation of the 5 × 3 filter. A row in an uppermost part in FIG. 3 is an input signal row. Data processing flows in a downward direction from the top of a screen, and a coefficient of a high-frequency component (high-frequency coefficient) and a coefficient of a low-frequency component (low-frequency coefficient) are output according to Equation (4) and Equation (5) in the following.

$$D_i^1 = d_i^0 - 1/2\,(s_i^0 + s_{i+1}^0)\,\dots(4)$$

$$s_i^1 = s_i^0 + 1/4\,(d_{i-1}^1 + d_i^1)\,\dots(5)$$

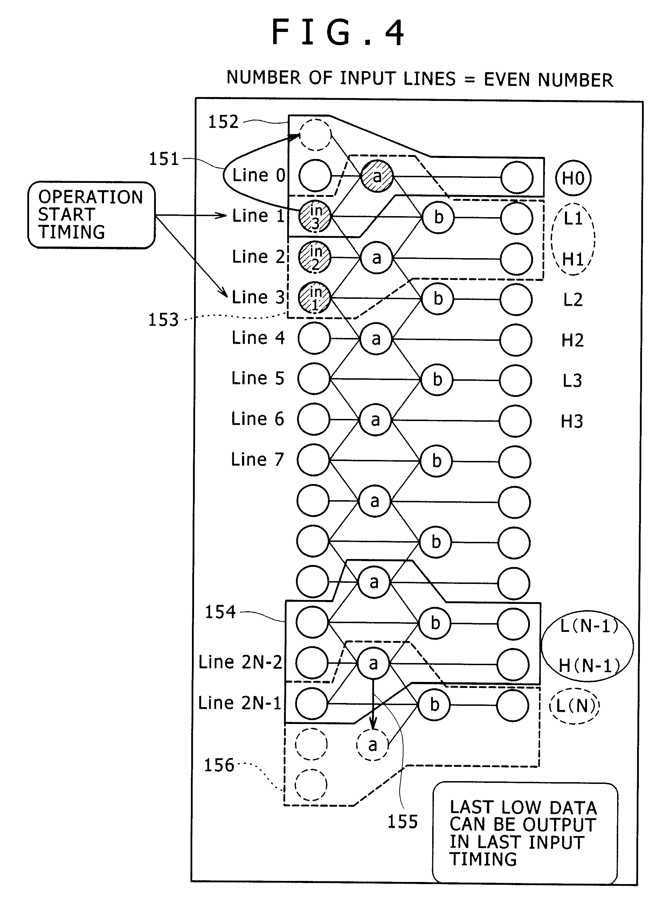

FIG. 4 is a diagram in a case of filtering lines in a vertical direction using a 5 × 3 analysis filter. An operation process and low-frequency and high-frequency coefficients generated by the operation process are illustrated in a horizontal direction. A comparison with FIG. 3 shows that only the horizontal direction is changed to the vertical direction and that an operation method is exactly the same.

At an upper end of an image, as indicated by an arrow 151, a highest line is symmetrically extended in the form of a dotted line from Line-1, and thus one line is filled. As indicated by a frame 152, a lifting operation is performed using three lines in total, that is, the filled line, Line-0, and Line-1, and a coefficient a is generated by an operation in Step-1. This coefficient a is a high-frequency coefficient (H0).

When Line-1, Line-2, and Line-3 are input, a next high-frequency coefficient a is calculated using the three lines. This coefficient a is a high-frequency coefficient (H1). Then, a calculation performed according to Equation (2) using three coefficients in total, that is, the first high-frequency coefficient a (H0) and the second high-frequency coefficient a (H1) as well as the coefficient of Line-1 generates a coefficient b. This coefficient b is a low-frequency coefficient (L1). That, as indicated by a frame 153, the low-frequency coefficient (L1) and the high-frequency coefficient (H1) are generated using the three lines of Line-1, Line-2, and Line-3 and the high-frequency coefficient (H0).

Thereafter, each time two lines are input, the above-described lifting operation is similarly repeated for the subsequent lines, and a low-frequency coefficient and a high-frequency coefficient are output. Then, after a low-frequency coefficient (L(N - 1)) and a high-frequency coefficient (H(N - 1)) are generated as indicated by a frame 154, the high-frequency coefficient (H(N - 1)) is symmetrically extended as indicated by an arrow 155, an operation is performed as indicated by a frame 156, and thereby a low-frequency coefficient (L(N)) is generated.

The above-described lifting operation is recursively performed for each layer.

FIG. 4 is an example of filtering lines in the vertical direction. It is obvious, however, that filtering in the horizontal direction can be considered in exactly the same manner.

[Procedure of Analysis Filtering]

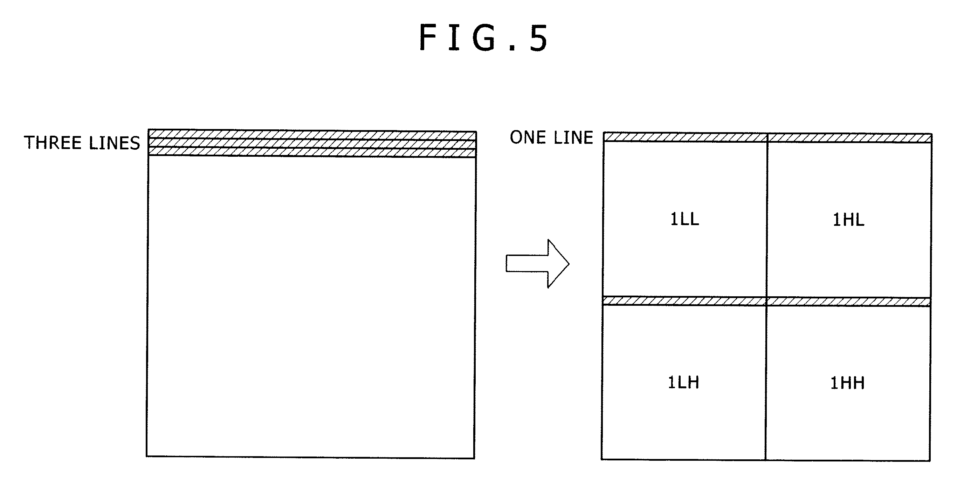

Analysis filtering as described above is advanced as in FIGS. 5 to 8.

Specifically, when three lines of baseband image data are input as shown on the left of FIG. 5, a lifting operation is performed as described above with reference to FIG 4, and one line is generated in each subband (1LL, 1LH, 1HL, and 1HH) at the division level 1, as shown on the right of FIG. 5.

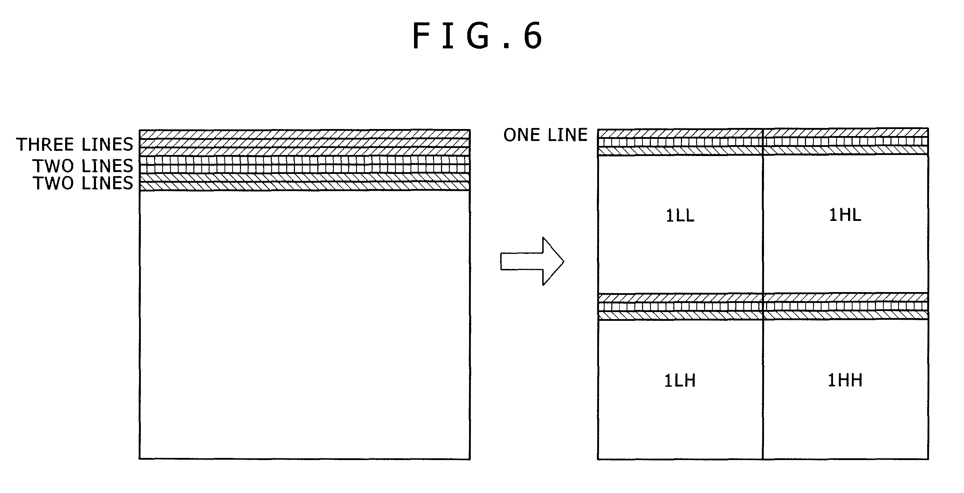

Thereafter a similar lifting operation is performed each time two lines of baseband image data are input. Thus, three coefficient lines are generated in each subband at the division level 1 as shown on the right of FIG 6 from seven lines of baseband image data as shown on the left of FIG 6.

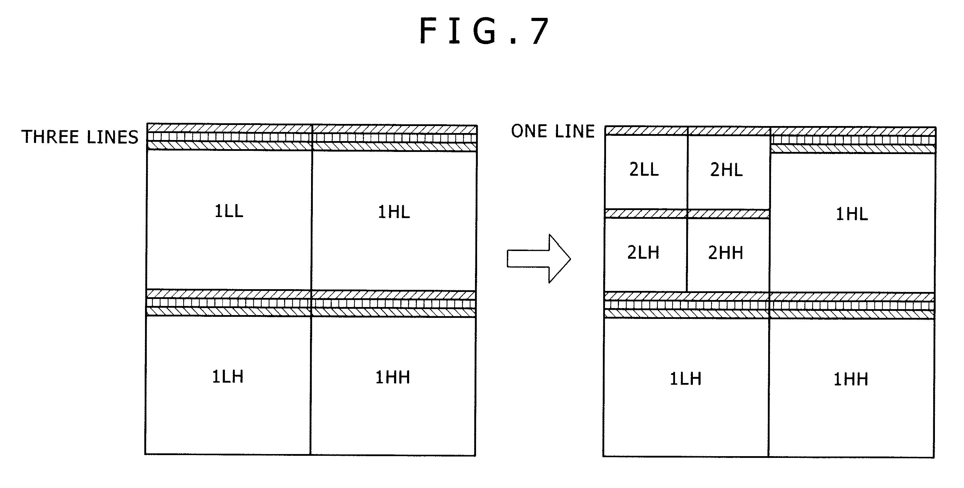

As shown on the left of FIG. 7 (right of FIG. 6), after three coefficient lines of the subband 1LL are generated, a lifting operation is performed as described above with reference to FIG. 4, and one line is generated in each subband (2LL, 2LH, 2HL, and 2HH) at the division level 2, as shown on the right of FIG. 7. Also at the division level 1, as in the case of the baseband, a lifting operation is thereafter performed each time two coefficient lines of the subband 1LL are generated, and one coefficient line is generated in each subband at the division level 2.

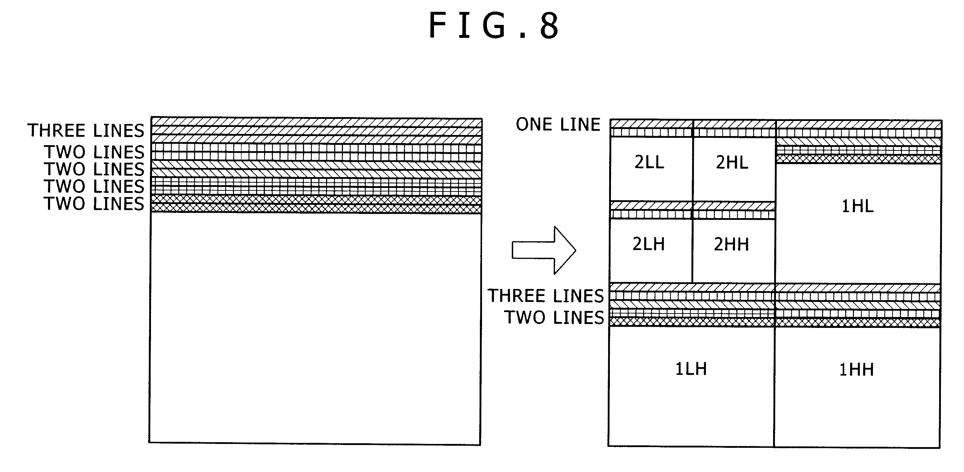

Thus, generated from 11 lines of baseband image data as shown on the left of FIG. 8 are 2 coefficient lines in each subband at the division level 2 and 5 coefficient lines in each of subbands 1LH, 1HL, and 1HH at the division level 1 as shown on the right of FIG. 8.

That is, a lifting operation in a highest layer which operation can be performed at a given point in time is performed. In other words, a lifting operation in a higher layer is performed preferentially.

Analysis filtering in an initial state at the upper end of the image needs three lines of image data or coefficient data as an input. However, in a steady state of other parts, analysis filtering is performed each time two lines of image data or coefficient data are input.

The lifting operation is advanced by the procedure as described above.

[Output of Wavelet Transform Section 103]

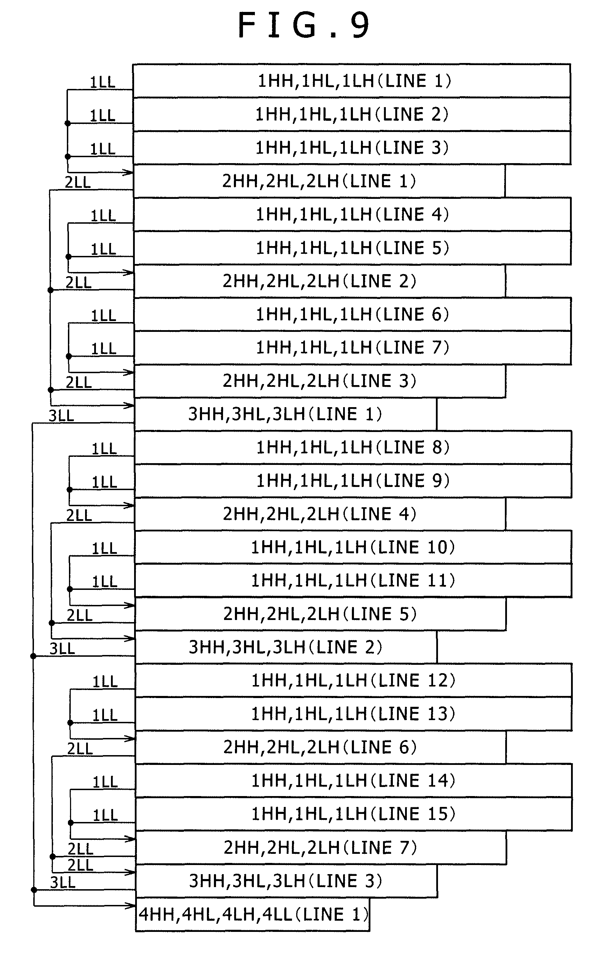

Description will next be made of data output from the wavelet transform section 103 that performs analysis filtering by the procedure as described above. FIG. 9 is a diagram showing data output from the wavelet transform section 103 in an initial state in order of time series. In FIG. 9, the data output from the wavelet transform section 103 is arranged in order of time series in a downward direction from the top of the figure.

Because the wavelet transform section 103 performs analysis filtering by the procedure as described above, in an initial state, a first coefficient line (line 1) from the top at the division level 1 (subbands 1HH, I HL, and 1LH) is output from the wavelet transform section 103 and supplied to the coefficient line rearranging section 104. The line 1 of a subband 1LL is supplied to the line buffer section 102, and retained in the line buffer section 102.

Next, on generating a line 2 (second coefficient line from the top) and a line 3 (third coefficient line from the top) at the division level 1, the line 2 and the line 3 are sequentially supplied to the coefficient line rearranging section 104. The line 2 and the line 3 of the subband 1LL are supplied to the line buffer section 102, and retained in the line buffer section 102.

As described above, when the three coefficient lines (two lines for a second time and thereafter) of the subband 1LL are retained in the line buffer section 102, the wavelet transform section 103 subjects the three coefficient lines to analysis filtering at the division level 1.

Thus, after the line 3 at the division level 1 is output, a line 1 at the division level 2 (subbands 2HH, 2HL, and 2LH) is output from the wavelet transform section 103 and supplied to the coefficient line rearranging section 104. The line 1 of a subband 2LL is supplied to the line buffer section 102, and retained in the line buffer section 102.

Next, a line 4 (fourth coefficient line from the top) and a line 5 (fifth coefficient line from the top) at the division level 1 are generated in this order, and are sequentially supplied to the coefficient line rearranging section 104. The line 4 and the line 5 of the subband 1LL are supplied to the line buffer section 102, and retained in the line buffer section 102.

Because two coefficient lines of the subband 1LL are retained in the line buffer section 102, the two coefficient lines are subjected to analysis filtering at the division level 1, and a line 2 at the division level 2 is output from the wavelet transform section 103 and supplied to the coefficient line rearranging section 104. The line 2 of the subband 2LL is supplied to the line buffer section 102, and retained in the line buffer section 102.

Next, a line 6 (sixth coefficient line from the top) and a line 7 (seventh coefficient line from the top) at the division level 1 are generated in this order, and are sequentially supplied to the coefficient line rearranging section 104. The line 6 and the line 7 of the subband 1LL are supplied to the line buffer section 102, and retained in the line buffer section 102.

Because two coefficient lines of the subband 1LL are retained in the line buffer section 102, the two coefficient lines are subjected to analysis filtering at the division level 1, and a line 3 at the division level 2 is output from the wavelet transform section 103 and supplied to the coefficient line rearranging section 104. The line 3 of the subband 2LL is supplied to the line buffer section 102, and retained in the line buffer section 102.

Because the three coefficient lines (two lines for a second time and thereafter) of the subband 2LL are retained in the line buffer section 102, the wavelet transform section 103 subjects the three coefficient lines to analysis filtering at the division level 2, and a line 1 at the division level 3 (subbands 3HH, 3HL, and 3LH) is output from the wavelet transform section 103 and supplied to the coefficient line rearranging section 104. The line 1 of a subband 3LL is supplied to the line buffer section 102, and retained in the line buffer section 102.

Next, a line 8 (eighth coefficient line from the top) and a line 9 (ninth coefficient line from the top) at the division level 1 are generated in this order, and are sequentially supplied to the coefficient line rearranging section 104. The line 8 and the line 9 of the subband 1LL are supplied to the line buffer section 102, and retained in the line buffer section 102.

When two coefficient lines of the subband 1LL are retained in the line buffer section 102, the two coefficient lines are subjected to analysis filtering at the division level 1, and a line 4 at the division level 2 is output from the wavelet transform section 103 and supplied to the coefficient line rearranging section 104. The line 4 of the subband 2LL is supplied to the line buffer section 102, and retained in the line buffer section 102.

Next, a line 10 (tenth coefficient line from the top) and a line 11 (eleventh coefficient line from the top) at the division level 1 are generated in this order, and are sequentially supplied to the coefficient line rearranging section 104. The line 10 and the line 11 of the subband 1LL are supplied to the line buffer section 102, and retained in the line buffer section 102.

When two coefficient lines of the subband 1LL are retained in the line buffer section 102, the two coefficient lines are subjected to analysis filtering at the division level 1, and a line 5 at the division level 2 is output from the wavelet transform section 103 and supplied to the coefficient line rearranging section 104. The line 5 of the subband 2LL is supplied to the line buffer section 102, and retained in the line buffer section 102.

When two coefficient lines of the subband 2LL are retained in the line buffer section 102, the two coefficient lines are subjected to analysis filtering at the division level 2, and a line 2 at the division level 3 is output from the wavelet transform section 103 and supplied to the coefficient line rearranging section 104. The line 2 of the subband 3LL is supplied to the line buffer section 102, and retained in the line buffer section 102.

Next, a line 12 (twelfth coefficient line from the top) and a line 13 (thirteenth coefficient line from the top) at the division level 1 are generated in this order, and are sequentially supplied to the coefficient line rearranging section 104. The line 12 and the line 13 of the subband 1LL are supplied to the line buffer section 102, and retained in the line buffer section 102.

When two coefficient lines of the subband 1LL are retained in the line buffer section 102, the two coefficient lines are subjected to analysis filtering at the division level 1, and a line 6 at the division level 2 is output from the wavelet transform section 103 and supplied to the coefficient line rearranging section 104. The line 6 of the subband 2LL is supplied to the line buffer section 102, and retained in the line buffer section 102.

Next, a line 14 (fourteenth coefficient line from the top) and a line 15 (fifteenth coefficient line from the top) at the division level 1 are generated in this order, and are sequentially supplied to the coefficient line rearranging section 104. The line 14 and the line 15 of the subband 1LL are supplied to the line buffer section 102, and retained in the line buffer section 102.

When two coefficient lines of the subband 1LL are retained in the line buffer section 102, the two coefficient lines are subjected to analysis filtering at the division level 1, and a line 7 at the division level 2 is output from the wavelet transform section 103 and supplied to the coefficient line rearranging section 104. The line 7 of the subband 2LL is supplied to the line buffer section 102, and retained in the line buffer section 102.

When two coefficient lines of the subband 2LL are retained in the line buffer section 102, the two coefficient lines are subjected to analysis filtering at the division level 2, and a line 3 at the division level 3 is output from the wavelet transform section 103 and supplied to the coefficient line rearranging section 104. The line 3 of the subband 3LL is supplied to the line buffer section 102, and retained in the line buffer section 102.

When the three coefficient lines (two lines for a second time and thereafter) of the subband 3LL are retained in the line buffer section 102, the wavelet transform section 103 subjects the three coefficient lines to analysis filtering at the division level 3, and a line 1 at the division level 4 (subbands 4HH, 4HL, 4LH, and 4LL) is output from the wavelet transform section 103 and supplied to the coefficient line rearranging section 104.

The above are a coefficient line group of one line block output from the wavelet transform section 103 in the initial state. After the initial state is ended, the state changes to a steady state in which two lines are processed at a time.

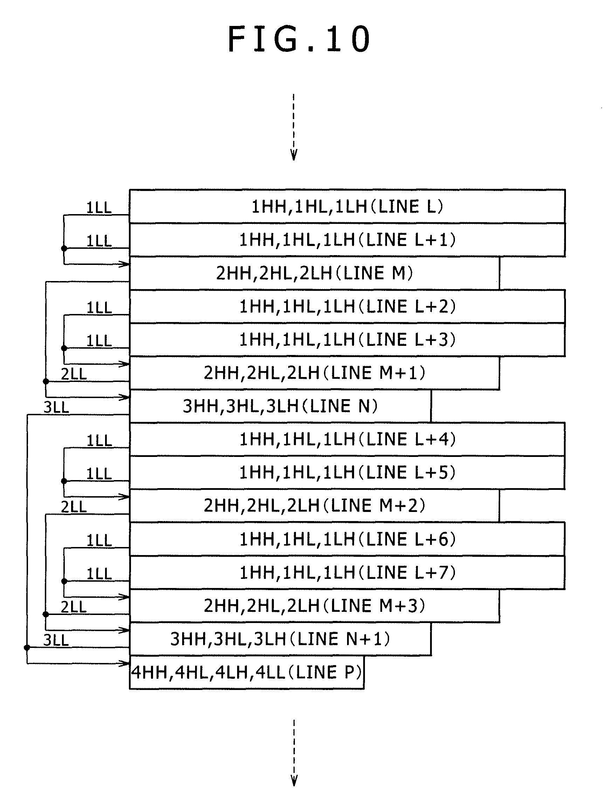

FIG. 10 is a diagram showing data output from the wavelet transform section 103 in a steady state in order of time series. In FIG. 10, as in FIG. 9, the data output from the wavelet transform section 103 is arranged in order of time series in a downward direction from the top of the figure.

Because the wavelet transform section 103 performs analysis filtering by the procedure as described above, in certain timing in the steady state, on generating a line L (an Lth coefficient line from the top) and a line (L + 1) (an (L + 1)th coefficient line from the top) at the division level, the line L and the line (L+ 1) are sequentially output from the wavelet transform section 103 and supplied to the coefficient line rearranging section 104. The line L and the line (L + 1) of the subband 1LL are supplied to the line buffer section 102, and retained in the line buffer section 102.

When two coefficient lines of the subband 1LL are retained in the line buffer section 102, the two coefficient lines are subjected to analysis filtering at the division level 1, and a line M (Mth coefficient line from the top) at the division level 2 is output from the wavelet transform section 103 and supplied to the coefficient line rearranging section 104. The line M of the subband 2LL is supplied to the line buffer section 102, and retained in the line buffer section 102.

Next, a line (L + 2) ((L + 2)th coefficient line from the top) and a line (L + 3) ((L + 3)th coefficient line from the top) at the division level 1 are generated in this order, and are sequentially supplied to the coefficient line rearranging section 104. The line (L + 2) and the line (L + 3) of the subband 1LL are supplied to the line buffer section 102, and retained in the line buffer section 102.

When two coefficient lines of the subband 1LL are retained in the line buffer section 102, the two coefficient lines are subjected to analysis filtering at the division level 1, and a line (M + 1) ((M + 1)th coefficient line from the top) at the division level 2 is output from the wavelet transform section 103 and supplied to the coefficient line rearranging section 104. The line (M + 1) of the subband 2LL is supplied to the line buffer section 102, and retained in the line buffer section 102.

When two coefficient lines of the subband 2LL are retained in the line buffer section 102, the two coefficient lines are subjected to analysis filtering at the division level 2, and a line N (Nth coefficient line from the top) at the division level 3 is output from the wavelet transform section 103 and supplied to the coefficient line rearranging section 104. The line N of the subband 3LL is supplied to the line buffer section 102, and retained in the line buffer section 102.

Next, a line (L + 4) ((L + 4)th coefficient line from the top) and a line (L + 5) ((L + 5)th coefficient line from the top) at the division level 1 are generated in this order, and are sequentially supplied to the coefficient line rearranging section 104. The line (L + 4) and the line (L + 5) of the subband 1LL are supplied to the line buffer section 102, and retained in the line buffer section 102.

When two coefficient lines of the subband 1LL are retained in the line buffer section 102, the two coefficient lines are subjected to analysis filtering at the division level 1, and a line (M + 2) ((M + 2)th coefficient line from the top) at the division level 2 is output from the wavelet transform section 103 and supplied to the coefficient line rearranging section 104. The line (M + 2) of the subband 2LL is supplied to the line buffer section 102, and retained in the line buffer section 102.

Next, a line (L + 6) ((L + 6)th coefficient line from the top) and a line (L + 7) ((L + 7)th coefficient line from the top) at the division level 1 are generated in this order, and are sequentially supplied to the coefficient line rearranging section 104. The line (L + 6) and the line (L + 7) of the subband 1LL are supplied to the line buffer section 102, and retained in the line buffer section 102.

When two coefficient lines of the subband 1LL are retained in the line buffer section 102, the two coefficient lines are subjected to analysis filtering at the division level 1, and a line (M + 3) ((M + 3)th coefficient line from the top) at the division level 2 is output from the wavelet transform section 103 and supplied to the coefficient line rearranging section 104. The line (M + 3) of the subband 2LL is supplied to the line buffer section 102, and retained in the line buffer section 102.

When two coefficient lines of the subband 2LL are retained in the line buffer section 102, the two coefficient lines are subjected to analysis filtering at the division level 2, and a line (N + 1) ((N + 1)th coefficient line from the top) at the division level 3 is output from the wavelet transform section 103 and supplied to the coefficient line rearranging section 104. The line (N + 1) of the subband 3LL is supplied to the line buffer section 102, and retained in the line buffer section 102.

When two coefficient lines of the subband 3LL are retained in the line buffer section 102, the two coefficient lines are subjected to analysis filtering at the division level 3, and a line P (Pth coefficient line from the top) at the division level 4 is output from the wavelet transform section 103 and supplied to the coefficient line rearranging section 104.

In the steady state as described above, processing is performed down to a lowest line.

Incidentally, the order of processing of each coefficient line in the wavelet transform section 103, that is, the order of output of each coefficient line from the wavelet transform section 103 is arbitrary, and may be an order other than that described above. However, by performing analysis filtering by the procedure as described above, the wavelet transform section 103 can generate each coefficient line efficiently, and perform conversion processing with a low delay.

[Coefficient Line Rearrangement]

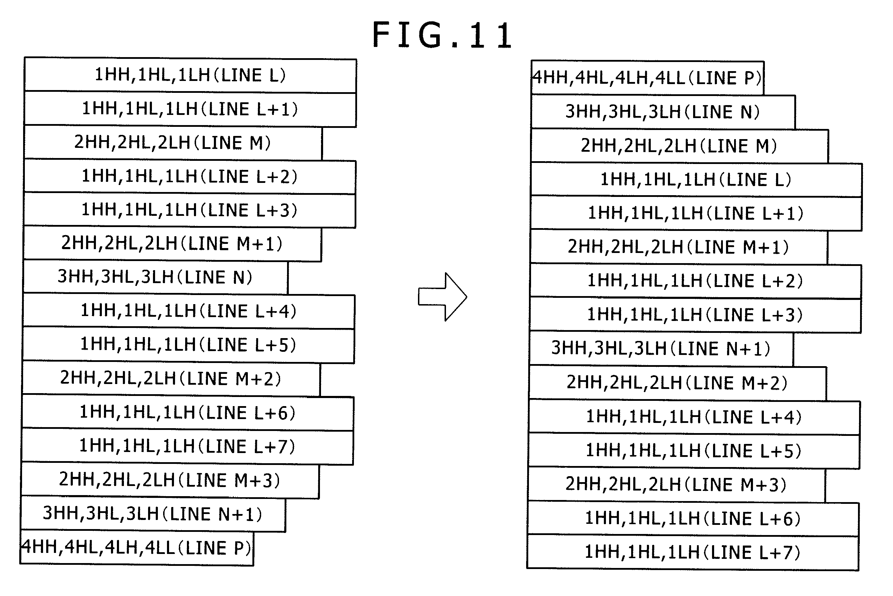

The coefficient lines at each division level which coefficient lines are output from the wavelet transform section 103 in the order described above with reference to FIG. 9 and FIG. 10 are retained in the coefficient line rearranging buffer 111 of the coefficient line rearranging section 104. When coefficient lines of one line block are accumulated, the coefficient line reading block 112 reads each coefficient line in order of wavelet inverse transform processing as shown in FIG. 11, and thereby rearranges the coefficient lines.

Each coefficient line in FIG. 11 is arranged in the order of the processing. A time series is shown in a downward direction from the top of FIG. 11. That is, each coefficient line shown in FIG 11 is processed in order from the top of the figure.

Specifically, the coefficient line rearranging section 104 rearranges each coefficient line output from the wavelet transform section 103 in order (wavelet transform output order) as shown on the left of FIG. 11 into the order of wavelet inverse transform processing as shown on the right of FIG. 11.

More specifically, the coefficient line reading block 112 reads the coefficient line of the line P at the division level 4, the coefficient line of the line N at the division level 3, the coefficient line of the line M at the division level 2, and the coefficient lines of the line L and the line (L + 1) at the division level 1. The coefficient line reading block 112 supplies the read coefficient lines to the quantizing section 105 in order of the readout.

The coefficient line reading block 112 next reads the coefficient line of the line (M + 1) at the division level 2, and the coefficient lines of the line (L + 2) and the line (L + 3) at the division level 1, The coefficient line reading block 112 supplies the read coefficient lines to the quantizing section 105 in order of the readout.

The coefficient line reading block 112 further reads the coefficient line of the line (N + 1) at the division level 3, the coefficient line of the line (M + 2) at the division level 2, and the coefficient lines of the line (L + 4) and the line (L + 5) at the division level 1. The coefficient line reading block 112 supplies the read coefficient lines to the quantizing section 105 in order of the readout.

The coefficient line reading block 112 next reads the coefficient line of the line (M + 3) at the division level 2, and the coefficient lines of the line (L + 6) and the line (L + 7) at the division level 1. The coefficient line reading block 112 supplies the read coefficient lines to the quantizing section 105 in order of the readout.

The quantizing section 105 processes the coefficient lines in order in which the coefficient lines are supplied, and then supplies the processed coefficient lines to the entropy coding section 106. Therefore the entropy coding section 106 also processes the coefficient lines in the order shown on the right of FIG. 11.

The rate controlling section 108 performs control that for example facilitates code amount generation by setting quantization step size small when coefficient values are low and which suppresses code amount generation by setting the step size large when the coefficient values are high.

Incidentally, it suffices to perform the rearrangement of the coefficient lines in the image coding device 100. For example, the rearrangement of the coefficient lines may be performed after quantization processing.

[Addition of Code Amount]

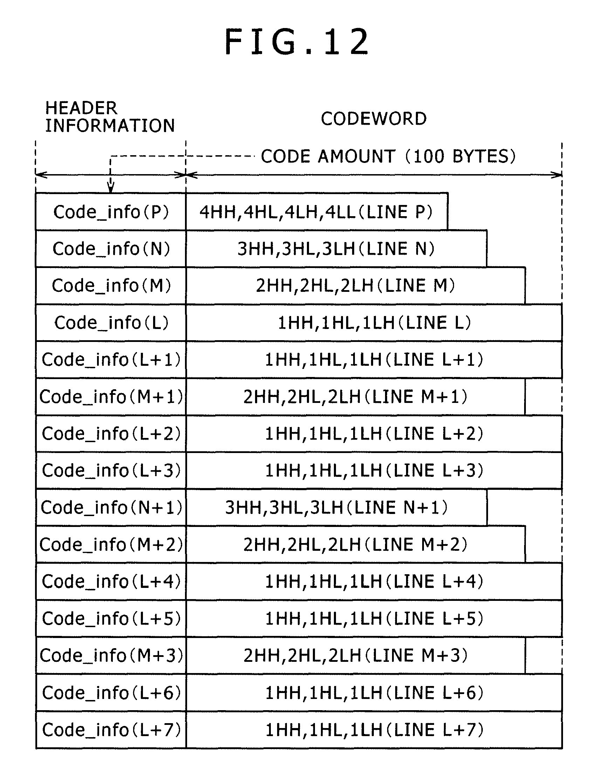

As described above, the adding section 107 adds, to each code line, the code amount of the code line as header information. FIG. 12 shows an example of a state in which the header information is added. In the example of FIG. 12, the adding section 107 adds, to a code line (codeword) at each division level, the code amount of the code line as header information (Code_info). For example, when the code amount of a code line (line L) at the division level 1 is 100 bytes, information indicating "100 bytes" is added as header information (Code_info(L)) to for example the head of the code line (line L). As described above, each part of the image coding device 100 handles coefficient data on a coefficient-line-by-coefficient-line basis. That is, each part can grasp boundaries between coefficient lines. However, an image decoding device for decoding coded data generated by the image coding device 100 is continuously supplied with each code line, and is thus unable to grasp boundaries between the code lines.

Accordingly, the addition of the code amount of each code line to coded data by the adding section 107 enables the image decoding device to divide coded data (stream) into each code line on the basis of the code amount, and process each code line.

[Process Flow]

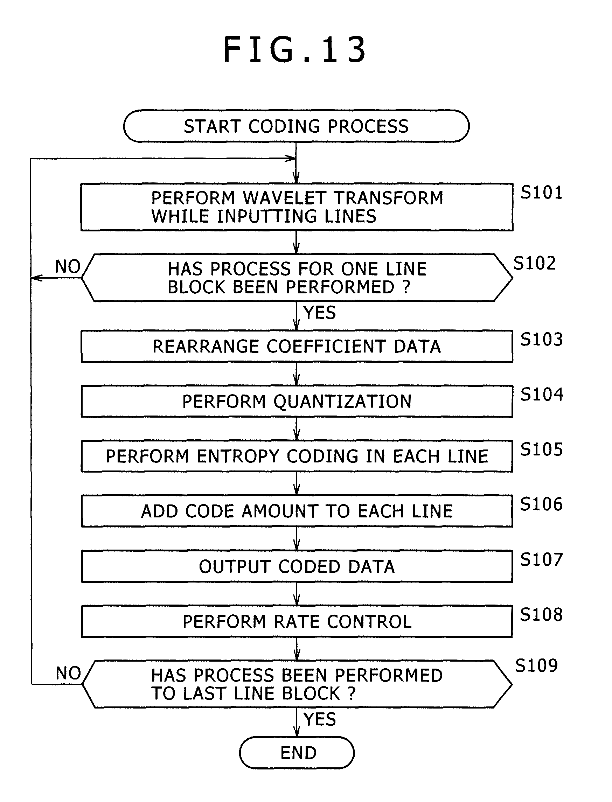

An example of a flow of a coding process performed by each part of the image coding device 100 as described above will be described with reference to a flowchart of FIG 13. Incidentally, this coding process is performed for each picture of an input image.

After the coding process is started, in step S101, while the image line inputting section 101 receives image data input on a line-by-line basis (while the image line inputting section 101 makes the line buffer section 102 retain the image data), the wavelet transform section 103 subjects one line block to a wavelet transform using coefficient lines retained in the line buffer section 102.

In step S 102, the wavelet transform section 103 determines whether processing for one line block has been performed. When it is determined that processing for one line block has not been performed, the process returns to step S101, where the wavelet transform section 103 continues the wavelet transform processing.

When it is determined that the wavelet transform processing for one line block has been performed, the process proceeds to step S103.

In step S103, the coefficient line rearranging section 104 rearranges coefficient data resulting from the wavelet transform into the order of wavelet inverse transform processing. In step S 104, the quantizing section 105 quantizes the coefficient data with a quantization step size specified by the rate controlling section 108.

In step S105, the entropy coding section 106 entropy-codes the coefficient data. In step S106, the adding section 107 adds, to each code line, the code amount of the code line as header information. In step S107, the adding section 107 outputs the coded data rearranged in the order of wavelet inverse transform processing.

In step S108, the rate controlling section 108 performs rate control on the basis of information on entropy coding in the entropy coding section 106.

In step S 109, the wavelet transform section 103 determines whether processing has been performed down to a last line block (for example a line block in a lowest stage) of the processing object picture.

When it is determined that processing has not been performed down to the last line block of the processing object picture, the process returns to step S101 to repeat the process from step S101 on down for a next line block. When it is determined in step S 109 that processing has been performed to the last line block, the coding process for the processing object picture is ended.

[Device Configuration of Image Decoding Device]

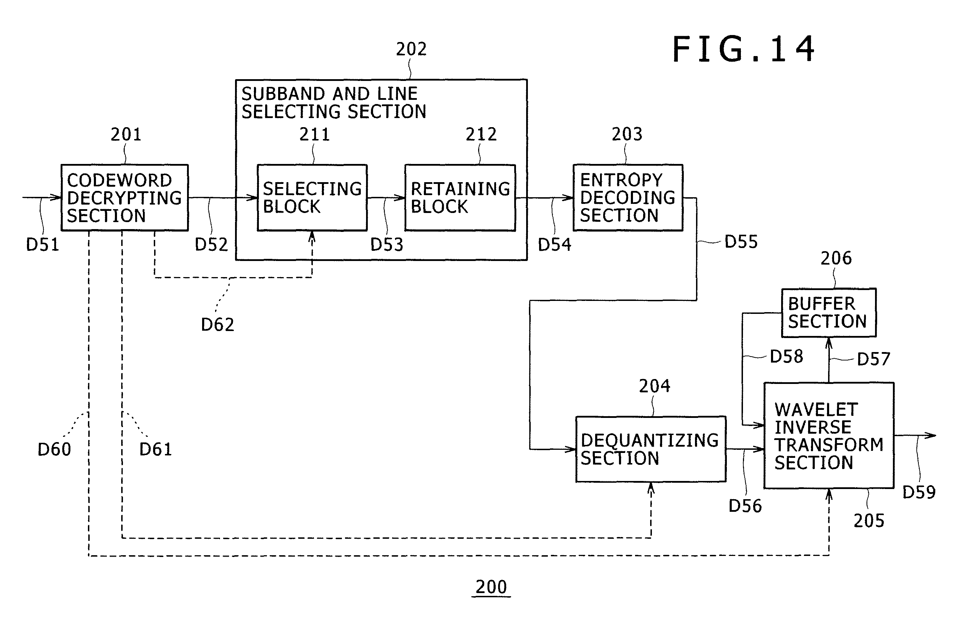

An image decoding device corresponding to the image coding device 100 described above will next be described. FIG. 14 is a block diagram showing an example of configuration of an embodiment of an image decoding device as an image processing device to which the present invention is applied.

The image decoding device 200 decodes coded data output from the image coding device 100, and thereby generates a decoded image.

The image decoding device 200 includes a codeword decrypting section 201, a subband and line selecting section 202, an entropy decoding section 203, a dequantizing section 204, a wavelet inverse transform section 205, and a buffer section 206.

The codeword decrypting section 201 decrypts input coded data (codeword) (arrow D51), and extracts related information related to the data and the coding process. This related information may include any information. The related information includes for example image resolution (horizontal and vertical size), the quantization step size, the number of decompositions of the wavelet transform, the order of arrangement of coefficient lines (code lines), and the like.

The information on the order of arrangement of coefficient lines (code lines) may be any information as long as the information indicates the order of arrangement of code lines at each division level or is information necessary to determine the order of the arrangement. For example, the information may be header information including the code amounts of code lines at each division level as shown in FIG. 12, a result of detection of markers to be described later, or the like.

The codeword decrypting section 201 supplies input coded data (code stream) to the subband and line selecting section 202 (arrow D52). In addition, the codeword decrypting section 201 supplies information necessary to distinguish code lines at each division level in the code stream to the subband and line selecting section 202 (dotted line arrow D62). For example, the codeword decrypting section 201 supplies the code amounts of the code lines at each division level, a result of detection of markers, or the like to the subband and line selecting section 202.

In addition, the codeword decrypting section 201 supplies information indicating a quantization step size to the dequantizing section 204 (dotted line arrow D61).

The codeword decrypting section 201 further supplies information necessary for wavelet inverse transform processing such for example as image resolution, the number of decompositions of the wavelet transform, or the like to the wavelet inverse transform section 205 (dotted line arrow D60). The subband and line selecting section 202 selects code lines at each division level to be decoded from the code stream supplied from the codeword decrypting section 201 on the basis of the information necessary to distinguish the code lines at each division level which information is supplied from the codeword decrypting section 201.

The image decoding device 200 generates a decoded image by decoding the coded data supplied from the image coding device 100. The coded data supplied from the image coding device 100 is obtained by entropy-coding coefficient data divided into a plurality of frequency bands by the wavelet transform. Subbands of the coefficient data are layered as described with reference to FIG. 2. A subband as a lowest-frequency component at that point in time (4LL in the example of FIG. 2) has most of energy of the image concentrated therein, and can be considered to be substantially equivalent to the original image (holds as image data). However, the higher the layer (lower-frequency component), the lower the resolution.

That is, the image decoding device 200 can generate a decoded image with a resolution lower than that of the original image by applying a wavelet inverse transform to the coefficient data thus divided into each subband from the highest layer (lowest-frequency component) to a desired layer. In other words, the image decoding device 200 can select the resolution of the decoded image by selecting layers to which the wavelet inverse transform (synthesis filtering) is applied. That is, the image decoding device 200 can scalably decode the coded data.

Thus decoding only a part of the subbands of the coded data to obtain a decoded image of a low resolution will be referred to as partial decoding. Incidentally, the resolution of a decoded image when all the subbands are decoded (full decoding) is the same as the resolution of the original image. When such partial decoding is performed, subbands of a high-frequency component not subjected to synthesis filtering are not necessary, and do not need to be entropy-decoded. Thus, the subband and line selecting section 202 selects only coefficient data of subbands to which to apply synthesis filtering (coded data corresponding to the coefficient data), and discards coefficient data of unnecessary subbands (coded data corresponding to the coefficient data). The subband and line selecting section 202 makes such selection on the basis of the information supplied from the codeword decrypting section 201.

The subband and line selecting section 202 has a selecting block 211 and a retaining block 212. The coded data (code stream) output from the codeword decrypting section 201 is supplied to the selecting block 211. The information necessary to distinguish the code lines at each division level in the code stream supplied from the codeword decrypting section 201 is also supplied to the selecting block 211. The selecting block 211 identifies the code lines at each division level in the code stream supplied from the codeword decrypting section 201 on the basis of the information necessary to distinguish the code lines at each division level in the code stream supplied from the codeword decrypting section 201, and makes selection from the code lines at the division levels.

The resolution of a decoded image is set in advance. That is, necessary data and unnecessary data are determined in advance. Thus, the selecting block 211 selects a part or all of the supplied code lines according to the setting.

Of course, for example a user or the like may select the resolution of a decoded image as appropriate so that the selecting block 211 identifies necessary code lines to be decoded according to an instruction specifying such a resolution, and retrieves and selects the identified code lines from the supplied code lines.

In either case, the selection of the selecting block 211 only extracts necessary code lines, and does not change the arrangement of the code lines. Thus, the subband and line selecting section 202 can supply the entropy decoding section 203 with each code line supplied in the order of the wavelet inverse transform while retaining the order of the wavelet inverse transform as it is.

The selecting block 211 supplies a selected code line to the retaining block 212, and makes the retaining block 212 retain the selected code line (arrow D53).

The retaining block 212 retains the code line supplied from the selecting block 211, and supplies the code line to the entropy decoding section 203 in predetermined timing (arrow D54). Incidentally, the retaining block 212 may be omitted, and the output of the selecting block 211 may be supplied to the entropy decoding section 203. However, depending on a manner of arrangement of code lines, timing in which a code line is selected by the selecting block 211 may deviate. Buffering the selected code line using the retaining block 212 can reduce the deviation, and thus improve efficiency of processing of the entropy decoding section 203.

The entropy decoding section 203 entropy-decodes code lines at each division level by a method corresponding to the entropy coding of the entropy coding section 106 (FIG. 1), and thereby generates coefficient data (quantized coefficients). The entropy decoding section 203 supplies the coefficient lines (quantized coefficients) at the division levels to the dequantizing section 204 (arrow D55).

The dequantizing section 204 dequantizes the coefficient lines (quantized coefficients) at each division level which coefficient lines are supplied from the entropy decoding section 203 by a quantization step size determined on the basis of the information supplied from the codeword decrypting section 201. The dequantizing section 204 supplies the dequantized coefficient lines (wavelet transform coefficients) at each division level to the wavelet inverse transform section 205 (arrow D56).

The wavelet inverse transform section 205 generates a decoded image by performing the reverse processing of the wavelet transform performed in the wavelet transform section 103 (FIG. 1) on the basis of the information supplied from the codeword decrypting section 201. Details of the wavelet inverse transform will be described later.

The wavelet inverse transform section 205 performs the wavelet inverse transform by repeating synthesis filtering that synthesizes the low-frequency component and the high-frequency component of coefficient data. At this time, the wavelet inverse transform section 205 supplies coefficient data in a next lower layer which coefficient data is generated by synthesis filtering to the buffer section 206 and makes the buffer section 206 retain the coefficient data in the next lower layer (arrow D57), and uses the coefficient data in the next lower layer for a next synthesis filtering. That is, the wavelet inverse transform section 205 performs synthesis filtering using not only the coefficient data supplied from the dequantizing section 204 (arrow D56) but also the coefficient data supplied from the buffer section 206 as required (arrow D58).

After reconstructing a decoded image by repeating synthesis filtering as described above, the wavelet inverse transform section 205 outputs the image data of the decoded image to the outside of the image decoding device 200 (arrow D59).

Thus, the image decoding device 200 can scalably decode coded data. At this time, the image decoding device 200 performs decoding using, as a unit, a line block that is a smaller unit than a picture. The image decoding device 200 can therefore decode coded data with a low delay and in a scalable manner.

In particular, this line block is image data of a number of lines necessary to generate at least one coefficient line of a highest subband, and can be made to be a minimum data unit to which a wavelet transform can be applied. The image decoding device 200 can therefore decode coded data with a lower delay and in a scalable manner.

[Partial Decoding]

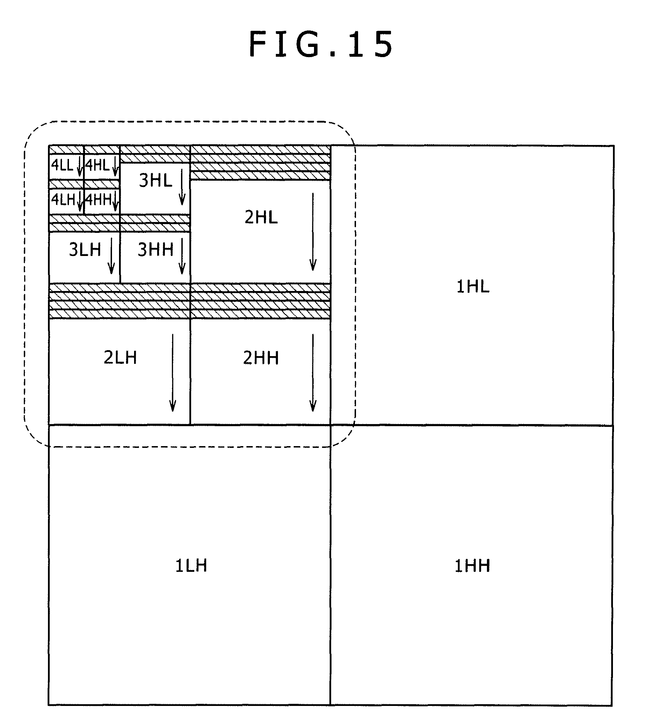

Partial decoding will next be described. FIG. 15 is a diagram of assistance in explaining an example of partial decoding. In FIG. 15, image data has been subjected to a wavelet transform, and is divided up to a division level 4.

For example, when the resolution of a decoded image is set at 1/4 of the resolution of the original image, the subband 1LL may be used as decoded image. Thus, as indicated by a dotted line frame, it suffices to subject the coefficient data of division levels 4 to 2 to synthesis filtering. That is, because the coefficient data of the subbands 1LH, 1HL, and 1HH is unnecessary, the subband and line selecting section 202 does not select code lines corresponding to the coefficient data of the subbands 1LH, 1HL, and 1HH.

Whether a code line is necessary or not is thus determined by the resolution of a decoded image to be generated.

In other words, code lines to be selected are determined by a layer to which a wavelet inverse transform is performed from the lowest layer.

[Example of Scalable Decoding]

For example, when the image decoding device 200 performs decoding with a resolution of 1/16 × 1/16 that of the original image, the subband and line selecting section 202 selects only a coefficient line of a lowest-frequency component (subband 4LL) at the division level 4 (lowest layer), as in a case 1 shown in FIG. 16A.

Because the wavelet transform and the wavelet inverse transform are performed in each line block, the selection of the subband and line selecting section 202 is also made in each line block. Thus, in the case 1, as shown in FIG. 16A, one coefficient line (code line) (line P) of the subband 4LL is selected.

In addition, for example, when the image decoding device 200 performs decoding with a resolution of 1/8 × 1/8 that of the original image, the subband and line selecting section 202 selects only a coefficient line (line P) of each subband (4HH, 4HL, 4LH, and 4LL) at the division level 4 (lowest layer), as in a case 2 shown in FIG. 16B.

Further, for example, when the image decoding device 200 performs decoding with a resolution of 1/4 × 1/4 that of the original image, the subband and line selecting section 202 selects the coefficient line (line P) of each subband (4HH, 4HL, 4LH, and 4LL) at the division level 4 (lowest layer) and coefficient lines (lines N and (N + 1)) of each subband (3HH, 3HL, and 3LH) at the division level 3, as in a case 3 shown in FIG. 16C.

In addition, for example, when the image decoding device 200 performs decoding with a resolution of 1/2 × 1/2 that of the original image, the subband and line selecting section 202 selects the coefficient line (line P) of each subband (4HH, 4HL, 4LH, and 4LL) at the division level 4 (lowest layer), the coefficient lines (lines N and (N + 1)) of each subband (3HH, 3HL, and 3LH) at the division level 3, and coefficient lines (lines M to (M + 3)) of each subband (2HH, 2HL, and 2LH) at the division level 2, as in a case 4 shown in FIG. 16D.

Further, for example, when the image decoding device 200 performs decoding with the same resolution as that of the original image, the subband and line selecting section 202 selects coefficient lines of all the subbands (the coefficient line (line P) of each subband (4HH, 4HL, 4LH, and 4LL) at the division level 4, the coefficient lines (lines N and (N + 1)) of each subband (3HH, 3HL, and 3LH) at the division level 3, the coefficient lines (lines M to (M + 3)) of each subband (2HH, 2HL, and 2LH) at the division level 2, and coefficient lines (lines L to (L+ 7)) of each subband (1HH, 1HL, and 1LH) at the division level 1), as in a case 5 shown in FIG. 16E.

Thus, it suffices for the entropy decoding section 203 and the subsequent processing sections to process only the selected code lines, and the image decoding device 200 can suppress an unnecessary increase in load due to unnecessary processing.

Incidentally, while a line block in a steady state (FIG. 10) has been described with reference to FIG 16, a line block in an initial state can be basically processed in a similar manner. Differences in arrangement of coefficient lines in the initial state and the steady state are as shown in FIG. 9 and FIG. 10. Hence, in the case of a line block in the initial state, it suffices only to reflect the differences shown in FIG. 9 and FIG. 10 in the above-described description, and therefore description thereof will be omitted.

[Lifting Operation]

The wavelet inverse transform section 205 performs a wavelet inverse transform by a method corresponding to wavelet transform processing by the wavelet transform section 103. For example, when the wavelet transform section 103 performs analysis filtering using a 5 × 3 filter as described above, the wavelet inverse transform section 205 performs synthesis filtering also using a 5 × 3 filter. Synthesis filtering is only reverse processing, and is basically similar processing to analysis filtering. That is, synthesis filtering can also reduce the calculation of filter processing by using the lifting technique as shown in FIG. 3.

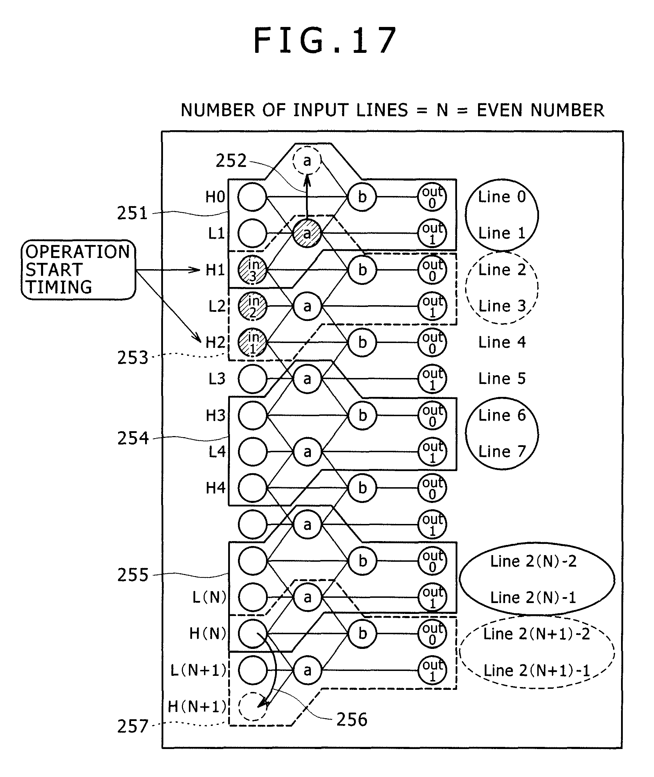

FIG. 17 is a diagram in a case of filtering lines in a vertical direction using a 5 × 3 synthesis filter. An operation process and lower-order coefficients generated by the operation process are illustrated in a horizontal direction. As in the case of analysis filtering, processing in the horizontal direction is performed in a similar manner to that of processing in the vertical direction. Synthesis filtering in the vertical direction is performed first, and synthesis filtering in the horizontal direction is performed next.

At an upper end of an image, as indicated by a frame 251, a lifting operation is performed at a point in time when a high-frequency coefficient (H0), a low-frequency coefficient (L1), and a high-frequency coefficient (H1) are input. At this time, as indicated by an arrow 252, a coefficient a is symmetrically extended. Thus, Line-0 and Line- in a next lower layer are generated.

Next, when two coefficient lines (a low-frequency component L2 and a high-frequency component H2) are input, as indicated by a frame 253, Line-2 and Line-3 in the next lower layer are generated.

Thereafter, each time two coefficient lines are input, as indicated by a frame 254, the above-described lifting operation is similarly repeated on the succeeding lines, and two lower-order coefficient lines are output. Then, when Line-2(N)-2 and Line-2(N)-1 are generated in correspondence with an input low-frequency coefficient (L(N)) and an input high-frequency coefficient (H(N)) as indicated by a frame 255, the high-frequency coefficient (H(N)) is symmetrically extended as indicated by an arrow 256, an operation is performed as indicated by a frame 257, and thereby Line-2(N + 1)-2 and Line-2(N + 1)-1 are generated.

[Synthesis Filtering in Line Block Unit]

The above synthesis filtering (lifting) is performed recursively for each layer. Thus, the number of lines is doubled each time the layer is lowered by one.

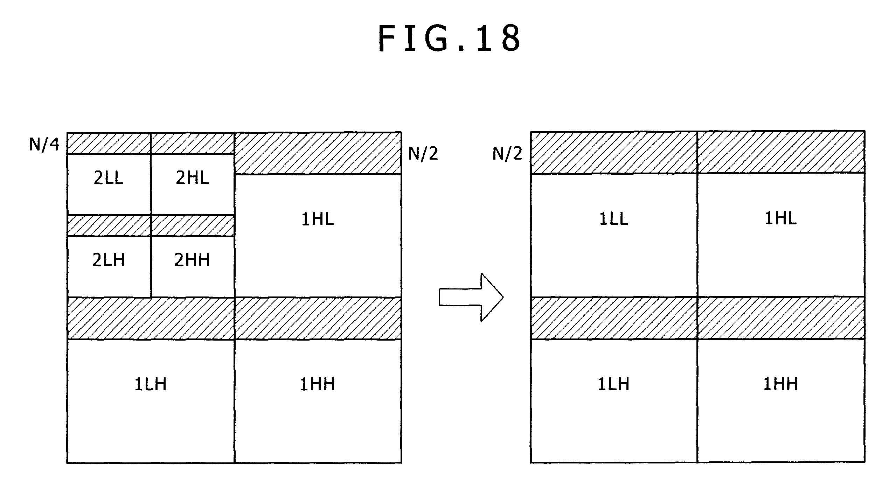

For example, suppose that there are N/4 coefficient lines at the division level 2, as shown in FIG. 18. When the subbands 2LL, 2LH, 2HL, and 2HH at the division level 2 are subjected to synthesis filtering, N/2 lines are generated in the subband 1LL at the division level 1.

[Order of Processing of Coefficient Lines]

An example of a process procedure for synthesis filtering by the wavelet inverse transform section 205 as described above will be described more concretely.

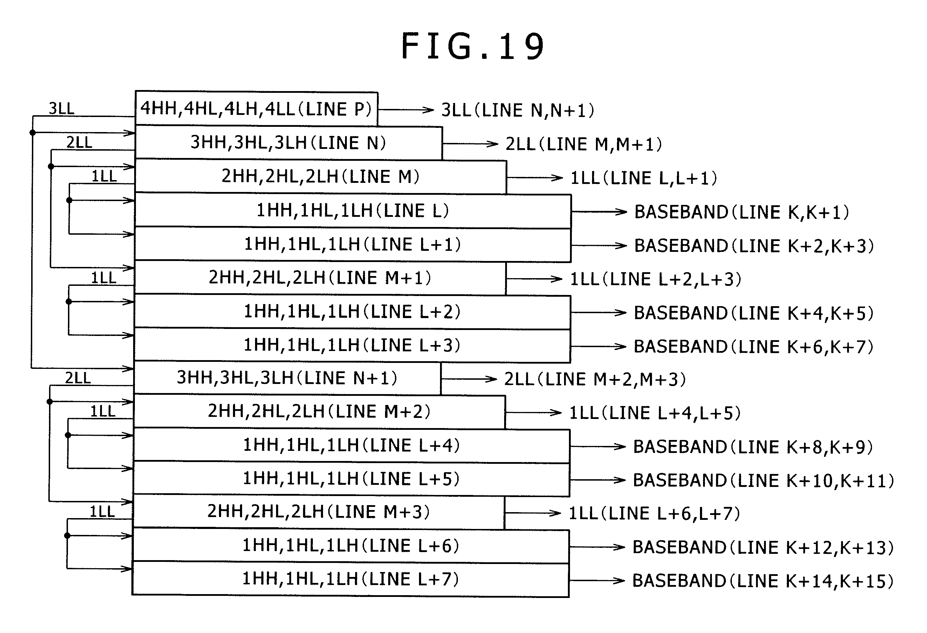

FIG. 19 is a diagram showing data processed by the wavelet inverse transform section 205 in a steady state in order of time series. In FIG. 19, the data processed by the wavelet inverse transform section 205 is arranged in order of time series in a downward direction from the top of the figure.

In the case 1 shown in FIG. 16A, the wavelet inverse transform section 205 outputs the supplied coefficient line (line P) of the subband 4LL as it is.

In the case 2 shown in FIG. 16B, the wavelet inverse transform section 205 subjects one supplied coefficient line (line P) of each subband (subbands 4HH, 4HL, 4LH, and 4LL) at the division level 4, thereby generates two coefficient lines (lines N and (N + 1)) of the subband 3LL at the division level 3, and then outputs the two coefficient lines (lines N and (N + 1)) of the subband 3LL at the division level 3.

In the case 3 shown in FIG. 16C, the wavelet inverse transform section 205 supplies the buffer section 206 with the coefficient line (N + 1) of the two coefficient lines (lines N and (N + 1)) of the subband 3LL at the division level 3 which coefficient lines are generated as in the case 2, and makes the buffer section 206 retain the coefficient line (N + 1).

Next, the wavelet inverse transform section 205 subjects the coefficient line (line N) of the subband 3LL at the division level 3 and one coefficient line (line N) of each of the other subbands (subbands 3HH, 3HL, and 3LH) to synthesis filtering, thereby generates two coefficient lines (lines M and (M + 1)) of the subband 2LL at the division level 2, and then outputs the two coefficient lines (lines M and (M + 1)) of the subband 2LL at the division level 2.

Next, the wavelet inverse transform section 205 reads the coefficient line (line (N + 1)) of the subband 3LL at the division level 3 from the buffer section 206, subjects the coefficient line (line (N + 1)) of the subband 3LL at the division level 3 and one coefficient line (line (N + 1)) of each of the other subbands (subbands 3HH, 3HL, and 3LH) to synthesis filtering, thereby generates two coefficient lines (lines (M + 2) and (M + 3)) of the subband 2LL at the division level 2, and then outputs the two coefficient lines (lines (M + 2) and (M + 3)) of the subband 2LL at the division level 2. In the case 4 shown in FIG. 16D, the wavelet inverse transform section 205 supplies the buffer section 206 with the coefficient line (M + 1) of the two coefficient lines (lines M and (M + 1)) of the subband 2LL at the division level 2 which coefficient lines are generated as in the case 3, and makes the buffer section 206 retain the coefficient line (M + 1).

Next, the wavelet inverse transform section 205 subjects the coefficient line (line M) of the subband 2LL at the division level 2 and one coefficient line (line M) of each of the other subbands (subbands 2HH, 2HL, and 2LH) to synthesis filtering, thereby generates two coefficient lines (lines L and (L + 1)) of the subband 1LL at the division level 1, and then outputs the two coefficient lines (lines L and (L + 1)) of the subband 1LL at the division level 1.

Next, the wavelet inverse transform section 205 reads the coefficient line (line (M + 1)) of the subband 2LL at the division level 2 from the buffer section 206, subjects the coefficient line (line (M + 1)) of the subband 2LL at the division level 2 and one coefficient line (line (M + 1)) of each of the other subbands (subbands 2HH, 2HL, and 2LH) to synthesis filtering, thereby generates two coefficient lines (lines (L + 2) and (L + 3)) of the subband 1LL at the division level 1, and then outputs the two coefficient lines (lines (L + 2) and (L + 3)) of the subband 1LL at the division level 1.

Next, the wavelet inverse transform section 205 reads the coefficient line (line (N + 1)) of the subband 3LL at the division level 3 from the buffer section 206, subjects the coefficient line (line (N + 1)) of the subband 3LL at the division level 3 and one coefficient line (line (N + 1)) of each of the other subbands (subbands 3HH, 3HL, and 3LH) to synthesis filtering, and thereby generates two coefficient lines (lines (M + 2) and (M + 3)) of the subband 2LL at the division level 2. The coefficient line (M + 3) of the two coefficient lines (lines (M + 2) and (M + 3)) is supplied to the buffer section 206, and retained in the buffer section 206.

Next, the wavelet inverse transform section 205 subjects the coefficient line (line (M + 2)) of the subband 2LL at the division level 2 and one coefficient line (line (M + 2)) of each of the other subbands (subbands 2HH, 2HL, and 2LH) to synthesis filtering, thereby generates two coefficient lines (lines (L + 4) and (L + 5)) of the subband 1LL at the division level 1, and then outputs the two coefficient lines (lines (L + 4) and (L + 5)) of the subband 1LL at the division level 1.

Next, the wavelet inverse transform section 205 reads the coefficient line (line (M + 3)) of the subband 2LL at the division level 2 from the buffer section 206, subjects the coefficient line (line (M + 3)) of the subband 2LL at the division level 2 and one coefficient line (line (M + 3)) of each of the other subbands (subbands 2HH, 2HL, and 2LH) to synthesis filtering, thereby generates two coefficient lines (lines (L + 6) and (L + 7)) of the subband 1LL at the division level 1, and then outputs the two coefficient lines (lines (L + 6) and (L + 7)) of the subband 1LL at the division level 1.

In the case 5 shown in FIG. 16E, the wavelet inverse transform section 205 supplies the buffer section 206 with the coefficient line (L + 1) of the two coefficient lines (lines L and (L + 1)) of the subband 1LL at the division level 1 which coefficient lines are generated as in the case 4, and makes the buffer section 206 retain the coefficient line (L + 1).

Next, the wavelet inverse transform section 205 subjects the coefficient line (line L) of the subband 1LL at the division level 1 and one coefficient line (line L) of each of the other subbands (subbands 1HH, 1HL, and 1LH) to synthesis filtering, thereby generates two lines (lines K and (K + 1)) of baseband image data, and then outputs the two lines (lines K and (K + 1)) of the baseband image data. Next, the wavelet inverse transform section 205 reads the coefficient line (line (L + 1)) of the subband 1LL at the division level 1 from the buffer section 206, subjects the coefficient line (line (L + 1)) of the subband 1LL at the division level 1 and one coefficient line (line (L + 1)) of each of the other subbands (subbands 1HH, 1HL, and 1LH) to synthesis filtering, thereby generates two lines (lines (K + 2) and (K + 3)) of the baseband image data, and then outputs the two lines (lines (K + 2) and (K + 3)) of the baseband image data.

Next, the wavelet inverse transform section 205 reads the coefficient line (line (M + 1)) of the subband 2LL at the division level 2 from the buffer section 206, subjects the coefficient line (line (M + 1)) of the subband 2LL at the division level 2 and one coefficient line (line (M + 1)) of each of the other subbands (subbands 2HH, 2HL, and 2LH) to synthesis filtering, and thereby generates two coefficient lines (lines (L + 2) and (L + 3)) of the subband 1LL at the division level 1. The coefficient line (L + 3) of the two coefficient lines (lines (L + 2) and (L + 3)) is supplied to the buffer section 206, and retained in the buffer section 206.

Next, the wavelet inverse transform section 205 subjects the coefficient line (line (L + 2)) of the subband 1LL at the division level 1 and one coefficient line (line (L + 2)) of each of the other subbands (subbands 1HH, 1HL, and 1LH) to synthesis filtering, thereby generates two lines (lines (K + 4) and (K + 5)) of the baseband image data, and then outputs the two lines (lines (K + 4) and (K + 5)) of the baseband image data.

Next, the wavelet inverse transform section 205 reads the coefficient line (line (L + 3)) of the subband 1LL at the division level 1 from the buffer section 206, subjects the coefficient line (line (L + 3)) of the subband 1LL at the division level 1 and one coefficient line (line (L + 3)) of each of the other subbands (subbands 1HH, 1HL, and 1LH) to synthesis filtering, thereby generates two lines (lines (K + 6) and (K + 7)) of the baseband image data, and then outputs the two lines (lines (K + 6) and (K + 7)) of the baseband image data.

Next, the wavelet inverse transform section 205 reads the coefficient line (line (N + 1)) of the subband 3LL at the division level 3 from the buffer section 206, subjects the coefficient line (line (N + 1)) of the subband 3LL at the division level 3 and one coefficient line (line (N + 1)) of each of the other subbands (subbands 3HH, 3HL, and 3LH) to synthesis filtering, and thereby generates two coefficient lines (lines (M + 2) and (M + 3)) of the subband 2LL at the division level 2. The coefficient line (M + 3) of the two coefficient lines (lines (M + 2) and (M + 3)) is supplied to the buffer section 206, and retained in the buffer section 206.

Next, the wavelet inverse transform section 205 subjects the coefficient line (line (M + 2)) of the subband 2LL at the division level 2 and one coefficient line (line (M + 2)) of each of the other subbands (subbands 2HH, 2HL, and 2LH) to synthesis filtering, and thereby generates two coefficient lines (lines (L + 4) and (L + 5)) of the subband 1LL at the division level 1. The coefficient line (L + 5) of the two coefficient lines (lines (L + 4) and (L + 5)) is supplied to the buffer section 206, and retained in the buffer section 206.

Next, the wavelet inverse transform section 205 subjects the coefficient line (line (L + 4)) of the subband 1LL at the division level 1 and one coefficient line (line (L + 4)) of each of the other subbands (subbands 1HH, 1HL, and 1LH) to synthesis filtering, thereby generates two lines (lines (K + 8) and (K + 9)) of the baseband image data, and then outputs the two lines (lines (K + 8) and (K + 9)) of the baseband image data.

Next, the wavelet inverse transform section 205 reads the coefficient line (line (L + 5)) of the subband 1LL at the division level 1 from the buffer section 206, subjects the coefficient line (line (L + 5)) of the subband 1LL at the division level 1 and one coefficient line (line (L + 5)) of each of the other subbands (subbands 1HH, 1HL, and 1LH) to synthesis filtering, thereby generates two lines (lines (K + 10) and (K + 11)) of the baseband image data, and then outputs the two lines (lines (K + 10) and (K + 11)) of the baseband image data.

Next, the wavelet inverse transform section 205 reads the coefficient line (line (M + 3)) of the subband 2LL at the division level 2 from the buffer section 206, subjects the coefficient line (line (M + 3)) of the subband 2LL at the division level 2 and one coefficient line (line (M + 3)) of each of the other subbands (subbands 2HH, 2HL, and 2LH) to synthesis filtering, and thereby generates two coefficient lines (lines (L + 6) and (L + 7)) of the subband 1LL at the division level 1. The coefficient line (L + 7) of the two coefficient lines (lines (L + 6) and (L + 7)) is supplied to the buffer section 206, and retained in the buffer section 206.

Next, the wavelet inverse transform section 205 subjects the coefficient line (line (L + 6)) of the subband 1LL at the division level 1 and one coefficient line (line (L + 6)) of each of the other subbands (subbands 1HH, 1HL, and 1LH) to synthesis filtering, thereby generates two lines (lines (K + 12) and (K + 13)) of the baseband image data, and then outputs the two lines (lines (K + 12) and (K + 13)) of the baseband image data.

Next, the wavelet inverse transform section 205 reads the coefficient line (line (L + 7)) of the subband 1LL at the division level 1 from the buffer section 206, subjects the coefficient line (line (L + 7)) of the subband 1LL at the division level 1 and one coefficient line (line (L + 7)) of each of the other subbands (subbands 1HH, 1HL, and 1LH) to synthesis filtering, thereby generates two lines (lines (K + 14) and (K + 15)) of the baseband image data, and then outputs the two lines (lines (K + 14) and (K + 15)) of the baseband image data.

As described above, the wavelet inverse transform section 205 subjects only necessary coefficient data to synthesis filter processing according to the resolution of a decoded image to be generated, so that an unnecessary increase in load can be suppressed. While the order of such synthesis filtering is arbitrary, it is desirable, for a lower delay, to perform synthesis filtering in a lower layer preferentially among layers in which synthesis filtering can be performed.

Incidentally, while a line block in a steady state has been described, differences in arrangement of coefficient lines in an initial state and the steady state are as shown in FIG. 9 and FIG. 10, and a line block in the initial state can be basically processed in a similar manner. Thus, description thereof will be omitted.

[Scalable Conversion]

As described above, the image coding device 100 and the image decoding device 200 subject image data (and coded data) to wavelet transform and wavelet inverse transform processing (coding and decoding processing) in line block units.

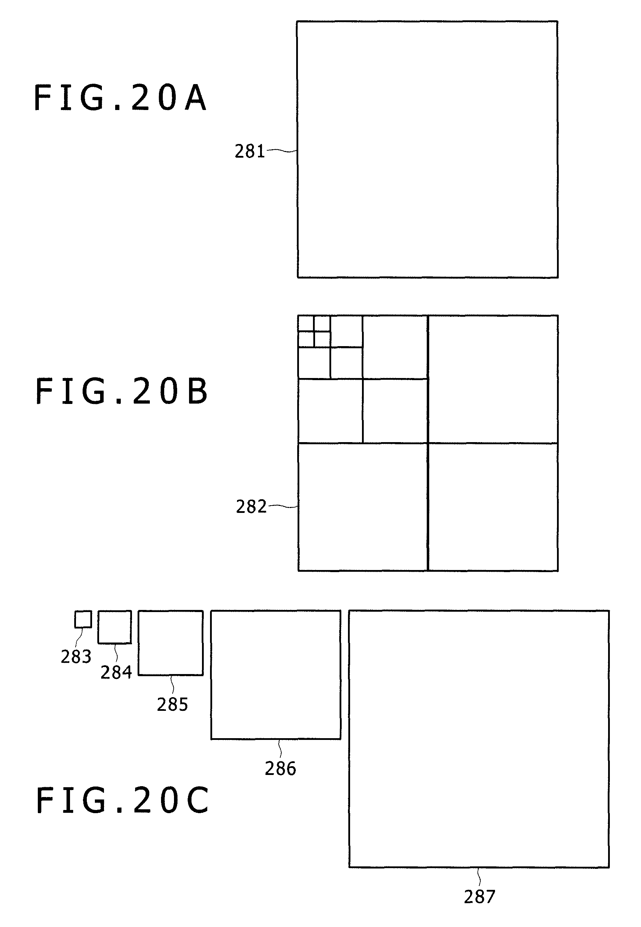

In terms of the whole of a picture, as shown in FIG. 20A, for example, baseband image data 281 is converted into coefficient data 282 (coded data) that has been divided into 13 subbands, as shown in FIG. 20B, by the encoding (wavelet transform) of the image coding device 100.

The coefficient data 282 is converted into a decoded image by the decoding (wavelet inverse transform) of the image decoding device 200. The image decoding device 200 can perform decoding scalably, as described above. Thus, as shown in FIG. 20C, the image decoding device 200 can generate a decoded image with a resolution (image size) of one of decoded images 283 to 287.

The image decoding device 200 can select an appropriate resolution (image size) according to for example the performance of hardware of the image decoding device 200, the performance of an image processing device for processing the decoded image, or the size of a display screen for displaying the decoded image. As described above, the magnitude of the resolution may be determined in advance, or the image decoding device 200 may select the magnitude of the resolution as appropriate according to a user specification, hardware specifications of a connected device, or the like.

[Process Flow]

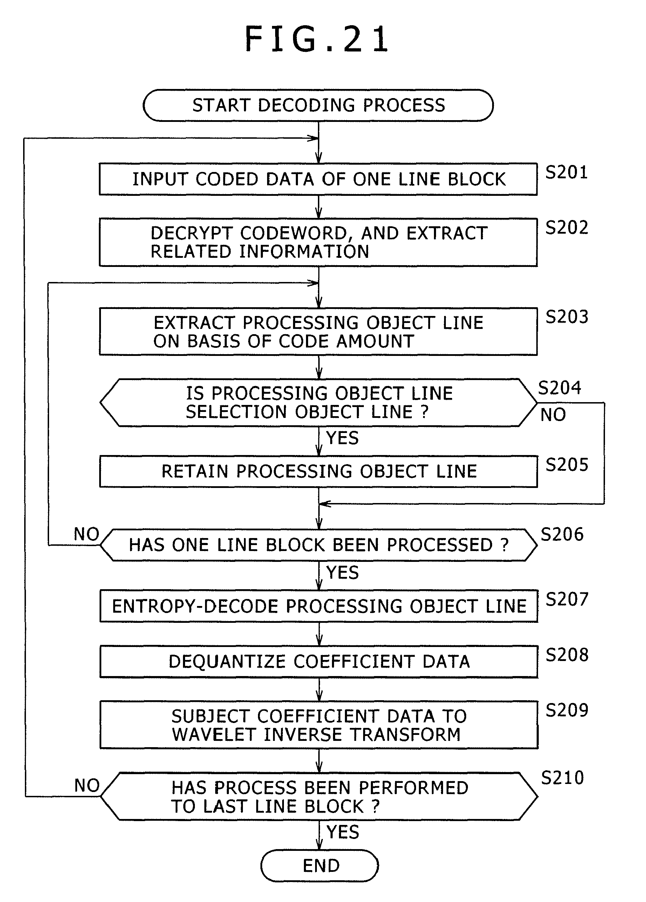

An example of a flow of a decoding process performed by each part of the image decoding device 200 as described above will be described with reference to a flowchart of FIG. 21. Incidentally, this decoding process is performed for each piece of coded data corresponding to an image of one picture. After the decoding process is started, in step S201, the codeword decrypting section 201 receives an input of coded data of one line block. In step S202, the codeword decrypting section 201 decrypts the codeword of the input coded data, and extracts related information. The codeword decrypting section 201 provides necessary information to each processing section on the basis of the extracted related information.

In step S203, the selecting block 211 of the subband and line selecting section 202 extracts a processing object line from the coded data on the basis of information (for example a code amount) supplied from the codeword decrypting section 201.

In step S204, the selecting block 211 determines whether the extracted processing object line is a selection object line. That is, the selecting block 211 determines whether the processing object line is a code line to be decoded which code line is necessary for scalable decoding. When it is determined that the processing object line is a selection object line, the process proceeds to step S205.

In step S205, the retaining block 212 retains the processing object line as a selection object line. After the processing object line is retained, the process proceeds to step S206. When it is determined in step S204 that the processing object line is not a code line to be decoded, and is unnecessary for scalable decoding, the process of step S205 is omitted, and the process proceeds to step S206 without retaining the processing object line.

In step S206, the codeword decrypting section 201 determines whether one line block has been processed. When it is determined that there is an unprocessed coefficient line within the processing object line block, the process returns to step S203 to repeat the process from step S203 on down. When it is determined in step S206 that one line block has been processed, the process proceeds to step S207.

In step S207, the entropy decoding section 203 reads the processing object line selected and retained as a selection object line from the code lines of one line block, and then entropy-decodes the processing object line. In step S208, the dequantizing section 204 dequantizes coefficient data obtained by entropy-decoding the processing object line.

In step S209, the wavelet inverse transform section 205 subjects the dequantized coefficient data to a wavelet inverse transform. As a result of the above process, the code lines of one line block are decoded scalably (full decoding or partial decoding).

In step S210, the wavelet inverse transform section 205 determines whether the process has been performed to a last line block (for example a line block in a lowest stage) of the processing object picture. When it is determine that the process has not been performed to the last line block, the process returns to step S201 to repeat the process from step S201 on down for a next line block. When it is determined in step S210 that the process has been completed to the last line block, the decoding process for the processing object picture is ended.

By performing the decoding process as described above, the image decoding device 200 can decode coded data obtained by coding an image with a low delay and in a scalable manner.

[Another Example of Code Line Breaks]

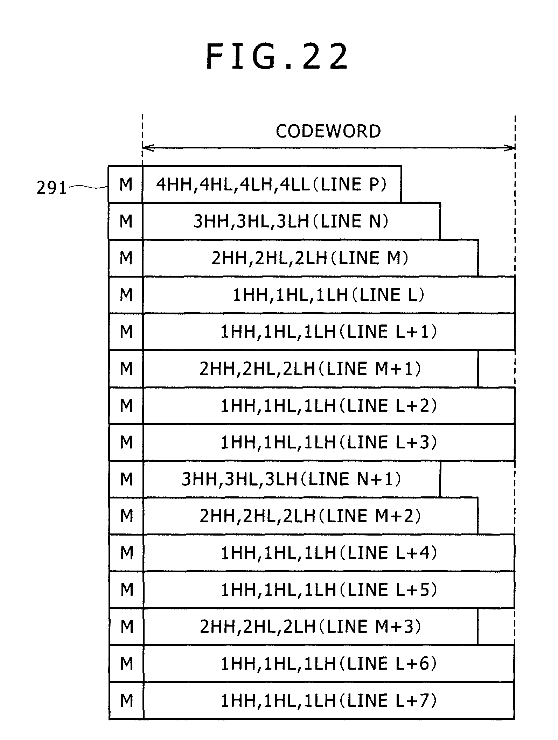

Incidentally, in FIG. 12, the image coding device 100 adds, to a code line at each division level, header information including the code amount of the code line so that the image decoding device 200 can distinguish breaks between code lines at each division level in a code stream. However, as another method for indicating the breaks, dedicated markers may be added as shown in FIG. 22, for example.

For example, the image coding device 100 adds the dedicated markers to boundaries between code lines at each division level in a code stream in the adding section 107. The image decoding device 200 can identify the boundaries between the code lines at each division level by detecting the markers. In this case, however, the image decoding device 200 can distinguish the code lines at each division level on the basis of the markers, but cannot determine the code amounts of the code lines. That is, the image decoding device 200 cannot determine the order of arrangement of the code lines at each division level directly from the markers. The image decoding device therefore needs to grasp the order of arrangement of the code lines by some other means.

<2. Second Embodiment>

[Device Configuration]

The above description has been made of the image coding device 100 rearranging coefficient lines generated by a wavelet transform into the order of a wavelet inverse transform. However, coefficient lines (code lines) may be transmitted in any order.

When the order of arrangement of coefficient lines (code lines) obtained by the image decoding device 200 is not the order of the wavelet inverse transform as described in the first embodiment, and the wavelet inverse transform is performed with the order unchanged, there is a fear of complication of data management in the buffer and a resulting increase in load. Further, when the order of arrangement of the coefficient data is not always the same, and the order of arrangement of the coefficient data differs according to specifications of the image coding device as a transmission source, there is a fear of further complication of data management at the time of the wavelet transform.

It is accordingly desirable to rearrange the coefficient data into the order of the wavelet inverse transform before the image decoding device performs the wavelet inverse transform.

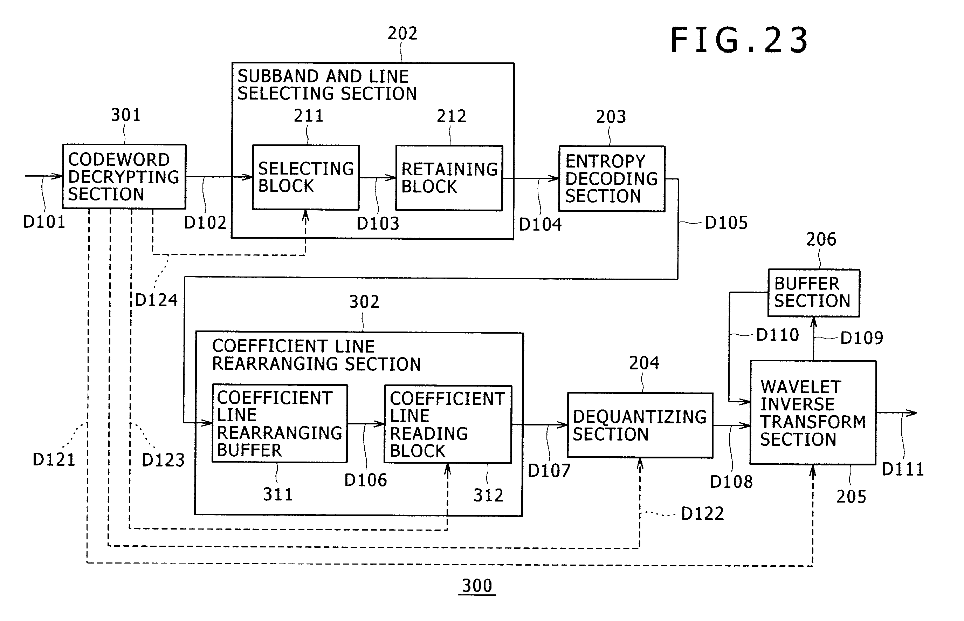

FIG. 23 is a block diagram showing an example of configuration of an image decoding device as an image processing device to which the present invention is applied.

As with the image decoding device 200 in FIG. 14, the image decoding device 300 in FIG. 23 generates a decoded image by decoding coded data generated by coding an image by the image coding device 100.

The image decoding device 300 has a basically similar configuration to that of the image decoding device 200. However, the image decoding device 300 has a coefficient line rearranging section 302 between an entropy decoding section 203 and a dequantizing section 204 in addition to the configuration of the image decoding device 200. In addition, the image decoding device 300 has a codeword decrypting section 301 in place of the codeword decrypting section 201.

The entropy decoding section 203 supplies coefficient lines (quantized coefficients) at a division level in question to the coefficient line rearranging section 302 (arrow D105).

The coefficient line rearranging section 302 rearranges the order of the coefficient data (coefficient lines) (order at the time of transmission) into the order of wavelet inverse transform processing on the basis of information necessary to distinguish code lines at each division level which information is supplied from the codeword decrypting section 301.

As shown in FIG 23, the coefficient line rearranging section 302 includes a coefficient line rearranging buffer 311 and a coefficient line reading block 312. The coefficient line rearranging buffer 311 retains coefficient lines at each division level which coefficient lines are supplied from the entropy decoding section 203. The coefficient line reading block 312 performs rearrangement by reading the coefficient lines at each division level which coefficient lines are retained in the coefficient line rearranging buffer 311 in the order of wavelet inverse transform processing (arrow D 106).

As with the codeword decrypting section 201, the codeword decrypting section 301 decrypts input coded data (codeword) (arrow D101), and extracts related information related to the data and the coding process. The codeword decrypting section 301 then supplies information necessary to rearrange the coefficient lines at each division level to the coefficient line reading block 312 (dotted line arrow D123). The coefficient line reading block 312 grasps the order of wavelet inverse transform processing by the wavelet inverse transform section 205, which order is the arrangement order after the rearrangement, in advance. The coefficient line reading block 312 needs to grasp the order of arrangement of the code lines at the time of transmission, which order is the arrangement order before the rearrangement, to rearrange the coefficient lines. The codeword decrypting section 301 accordingly provides the coefficient line reading block 312 with information indicating the order of arrangement of the code lines at the time of transmission or information necessary to obtain the arrangement order.

For example, the codeword decrypting section 301 may identify the order of arrangement of the code lines at the time of transmission by decrypting codewords, and provide information indicating the arrangement order to the coefficient line reading block 312. In addition, for example, the codeword decrypting section 301 may sequentially provide information indicating the code amounts of the code lines at each division level which information is extracted from the code stream to the coefficient line reading block 312. In this case, the coefficient line reading block 312 grasps the order of arrangement of the coefficient lines on the basis of the order of the code amounts supplied from the codeword decrypting section 301.

Incidentally, the coefficient lines at each division level are stored in a state of being distinguishable from each other in the coefficient line rearranging buffer 311. Accordingly, the coefficient line reading block 312 may obtain the data amounts of the coefficient lines at each division level which coefficient lines are retained in the coefficient line rearranging buffer 311, and grasp the order of arrangement of the coefficient lines from the order of arrangement of the data amounts. In this case, information provision from the codeword decrypting section 301 can be omitted.

The coefficient line rearranging section 302 (coefficient line reading block 312) supplies the coefficient data in the rearranged order to the dequantizing section 204 (arrow D107).

The dequantizing section 204 processes the coefficient data in the order in which the coefficient data is supplied to the dequantizing section 204. The wavelet inverse transform section 205 is therefore supplied with the coefficient data in the order rearranged by the coefficient line rearranging section 302 (arrow D108).

That is, the wavelet inverse transform section 205 can perform synthesis filtering using the supplied data in that order. The wavelet inverse transform section 205 can therefore perform a wavelet inverse transform with a low delay without requiring an undesired wait time or the like. In addition, because the coefficient data can be managed easily, the wavelet inverse transform section 205 can reduce the load of wavelet inverse transform processing.

Thus, the image decoding device 300 can decode coded data from more various image coding devices with a low delay and in a scalable manner.

[Examples of Order of Transmission]

Incidentally, the order of arrangement (order of transmission) of code lines (coefficient lines) is arbitrary. With any arrangement order, the coefficient line rearranging section 302 grasps the arrangement order on the basis of information from the codeword decrypting section 301, and performs rearrangement from the arrangement order to the order of wavelet inverse transform processing.

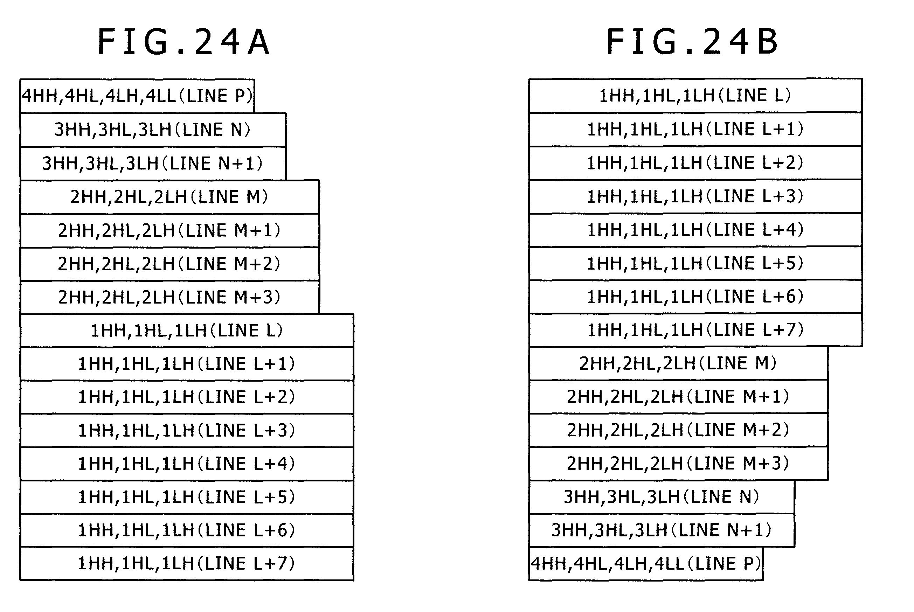

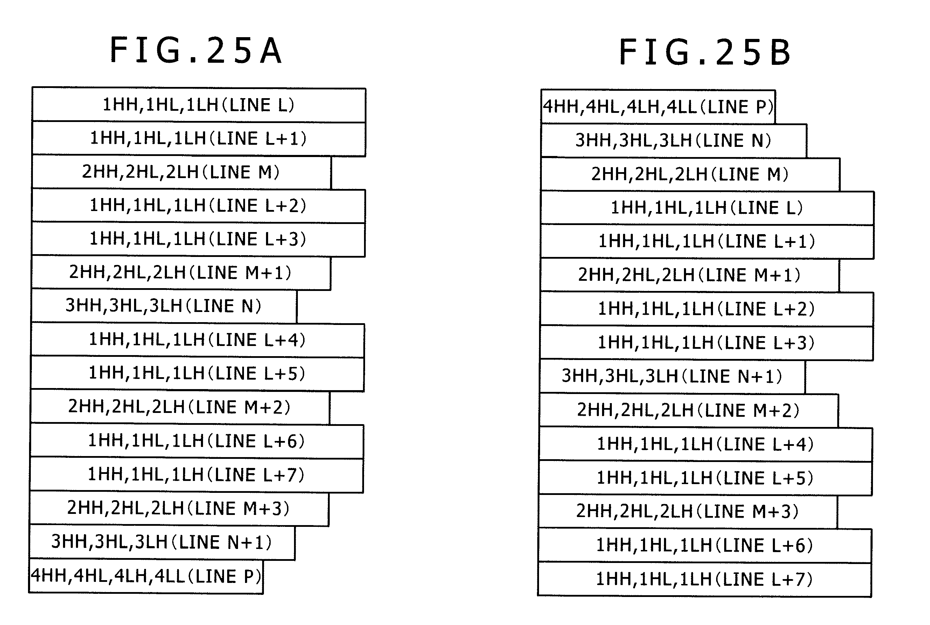

Examples of the transmission order are shown in FIGS. 24A and 24B and FIGS. 25A and 25B. In FIGS. 24A and 24B and FIGS. 25A and 25B, coefficient lines are arranged in respective transmission orders. A time series is shown in a downward direction from the top of the figures. That is, the coefficient lines shown in FIGS. 24A and 24B and FIGS. 25A and 25B are transmitted in order from the top of the figures.

FIG. 24A shows an example in which the coefficient lines at each division level are transmitted in order from a low-frequency component to a high-frequency component. FIG. 24B shows an example in which the coefficient lines at each division level are transmitted in order from the high-frequency component to the low-frequency component. FIG. 25A shows an example in which the coefficient lines at each division level are transmitted in order in which the coefficient lines have been subjected to wavelet transform processing as they are. FIG. 25B shows an example in which the coefficient lines at each division level are transmitted in order in which the coefficient lines have been subjected to wavelet inverse transform processing.

The transmission orders in the cases of FIG. 24A, FIG. 24B, and FIG. 25A are different from the order of wavelet inverse transform processing, and therefore the coefficient line rearranging section 302 grasps the transmission orders and rearranges the transmission orders into the order of wavelet inverse transform processing.

In the case of FIG. 25B, the coefficient line rearranging section 302 omits the rearrangement, and supplies the dequantizing section 204 with the coefficient data in the order as it is. That is, the coefficient line reading block 312 reads the coefficient lines at each division level in order in which the coefficient lines are retained in the coefficient line rearranging buffer 311, and then supplies the coefficient lines to the dequantizing section 204.

Incidentally, as described above, the selection of the selecting block 211 does not change the arrangement of the code lines. Thus, in any of the above-described cases, the coefficient line rearranging buffer 311 can rearrange the coefficient data by the same method irrespective of coefficient lines at division levels selected by the subband and line selecting section 202 (irrespective of the resolution of a decoded image to be generated).

[Process Flow]

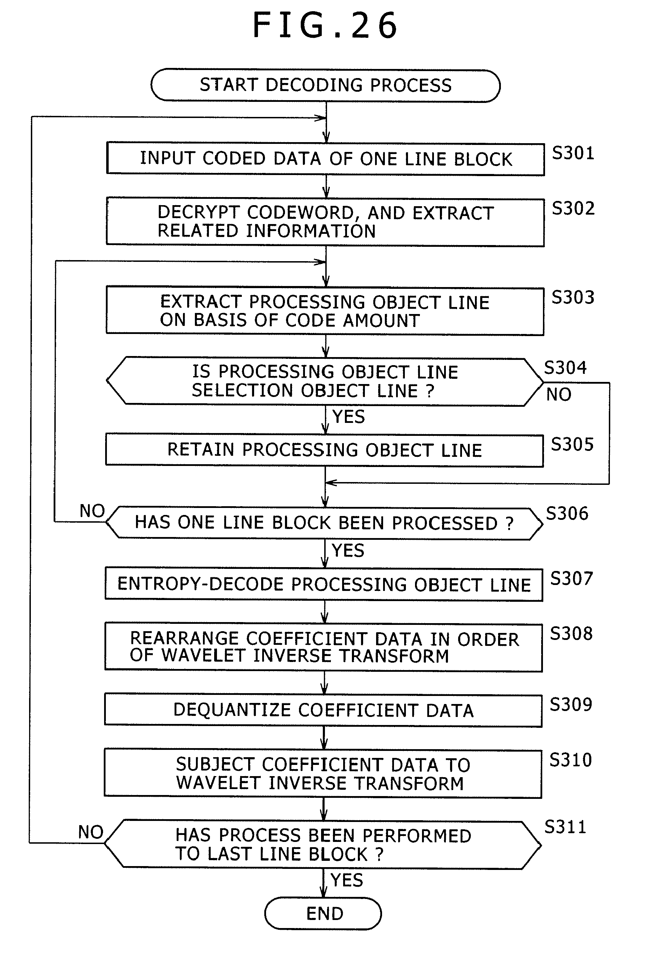

An example of a flow of a decoding process performed by each part of the image decoding device 300 as described above will be described with reference to a flowchart of FIG. 26. Incidentally, this decoding process is performed for each piece of coded data corresponding to an image of one picture. The image decoding device 300 basically performs a similar image decoding process to that of the image decoding device 200 described with reference to the flowchart of FIG. 21.

Specifically, each part of the image decoding device 300 performs the respective processes of steps S301 to S307 in similar manners to the respective processes of steps S201 to S207 in FIG. 21.

In step S308, the coefficient line rearranging section 302 rearranges coefficient data into the order of the wavelet inverse transform.

Each part of the image decoding device 300 performs the respective processes of steps S309 to S311 in similar manners to the respective processes of steps S208 to S210 in FIG. 21.

By performing the decoding process as described above, the image decoding device 300 can decode coded data obtained by coding an image with a low delay and in a scalable manner.

Incidentally, it suffices for the coefficient line rearranging section 302 in the image decoding device 300 to be situated at a position preceding the wavelet inverse transform section 205. For example, the coefficient line rearranging section 302 may be disposed between the subband and line selecting section 202 and the entropy decoding section 203, or the coefficient line rearranging section 302 may be disposed between the dequantizing section 204 and the wavelet inverse transform section 205.

<3. Third Embodiment>

[System Configuration]

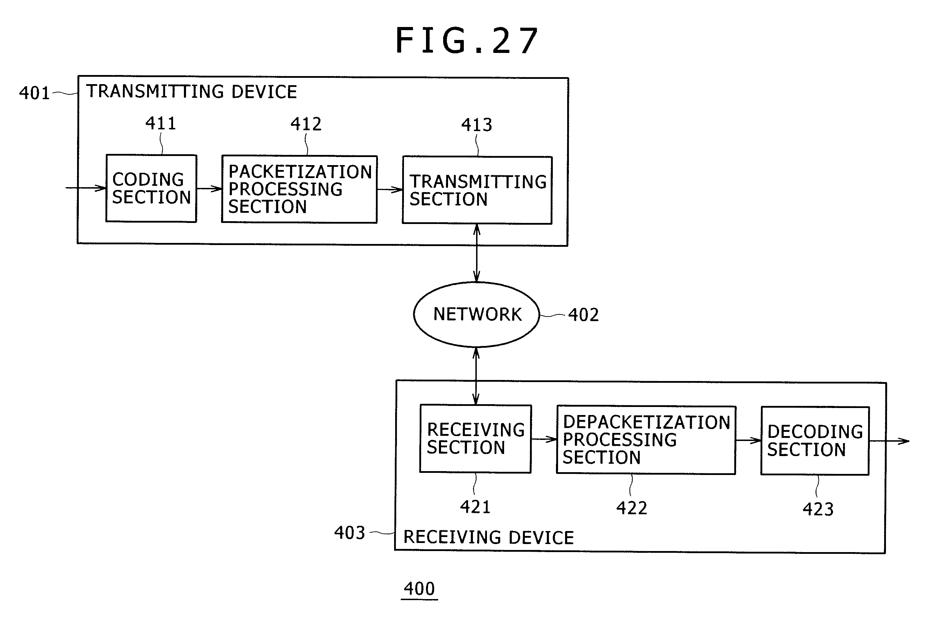

Description will be made of an example of application of the image coding device 100 and the image decoding device 200 described in the first embodiment (or the image decoding device 300 described in the second embodiment). FIG. 27 is a diagram showing an example of configuration of an image transmission system that codes and transmits an input image, decodes the coded data at a transmission destination, and then outputs a resulting decoded image.

The image transmission system 400 transmits an image with a lower delay. The image transmission system 400 has a transmitting device 401 and a receiving device 403 connected to each other via a network 402.

The transmitting device 401 transmits an input image to the receiving device 403 via the network 402. The transmitting device 401 codes image data to transmit the image efficiently, and then transmits the coded data to the receiving device 403.

The transmitting device 401 has a coding section 411, a packetization processing section 412, and a transmitting section 413.

The coding section 411 codes the input image, and outputs the coded data. The image coding device 100 described in the first embodiment is applied to the coding section 411. That is, the coding section 411 has a similar configuration to that of the image coding device 100, and performs similar processing to that of the image coding device 100.

The packetization processing section 412 packetizes the coded data (code stream) output from the coding section 411. The transmitting section 413 transmits packets generated by the packetization processing section 412 to the receiving section 421 via the network 402.

The network 402 is for example an arbitrary communication network typified by the Internet, a wireless LAN and the like, and is a transmission line for the coded data transmitted from the transmitting device 401 to the receiving device 403. The configuration of the network 402 is arbitrary. The network 402 may be formed by a set of a plurality of networks, and a part or the whole of the network 402 may be formed by wire or radio.

The receiving device 403 receives the packets supplied from the transmitting device 401 via the network 402, decodes the coded data included in the packets, thereby generates a decoded image, and then outputs the decoded image.

The receiving device 403 has a receiving section 421, a depacketization processing section 422, and a decoding section 423.

The receiving section 421 performs processing corresponding to the transmitting section 413 of the transmitting device 401, and performs a process of receiving the packets supplied from the transmitting section 413 via the network.

The depacketization processing section 422 depacketizes the packets received in the receiving section 421, and thereby extracts the coded data.

The decoding section 423 decodes the coded data extracted by the depacketization processing section 422, and outputs a decoded image. The image decoding device 200 described in the first embodiment (or the image decoding device 300 described in the second embodiment) is applied to the decoding section 423. That is, the decoding section 423 has a similar configuration to that of the image decoding device 200 (or the image decoding device 300), and performs similar processing to that of the image decoding device 200 (or the image decoding device 300).

By thus applying the image decoding device 200 as the decoding section 423, the receiving device 403 can decode coded data with a low delay and in a scalable manner. In addition, by applying the image decoding device 300 having the coefficient line rearranging section 302 as the decoding section 423, the receiving device 403 can decoded coded data from more various image coding devices with a low delay and in a scalable manner.

<4. Fourth Embodiment>

[Personal Computer]

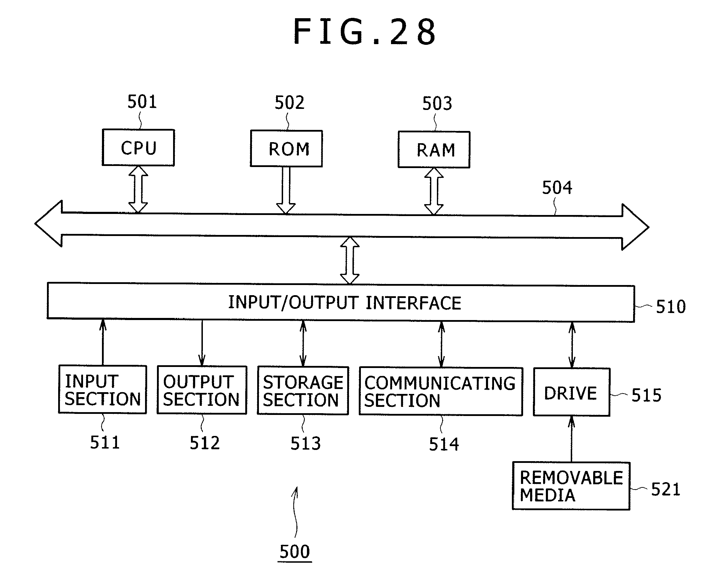

The series of processes described above can be carried out not only by hardware but also by software. In this case, the image coding device 100 and the image decoding device 200 (or the image decoding device 300) may be formed as a personal computer as shown in FIG. 28, for example.

In FIG. 28, a CPU 501 of the personal computer 500 performs various processes according to a program stored in a ROM (Read Only Memory) 502 or a program loaded from a storage section 513 into a RAM (Random Access Memory) 503. The RAM 503 also stores data necessary for the CPU 501 to perform the various processes and the like as appropriate.

The CPU 501, the ROM 502, and the RAM 503 are interconnected via a bus 504. The bus 504 is also connected with an input-output interface 510.

The input-output interface 510 is connected with an input section 511 composed of a keyboard, a mouse and the like, an output section 512 composed of a display formed by a CRT (Cathode Ray Tube), an LCD (Liquid Crystal Display) or the like, a speaker, and the like, the storage section 513 composed of a hard disk and the like, and a communicating section 514 composed of a modem and the like. The communicating section 514 performs a communicating process via a network including the Internet.

The input-output interface 510 is also connected with a drive 515 as required. Removable media 521 such as a magnetic disk, an optical disk, a magneto-optical disk, a semiconductor memory and the like are loaded into the drive 515 5 as appropriate. A computer program read from these removable media is installed into the storage section 513 as required.

When the series of processes described above is to be carried out by software, a program constituting the software is installed from a network or a recording medium.

As shown in FIG. 28, for example, the recording medium is not only formed by the removable media 521 distributed to users to distribute the program separately from the device proper and having the program recorded thereon, the removable media 521 including a magnetic disk (including flexible disks), an optical disk (including CD-ROM (Compact Disk-Read Only Memory) and DVD (Digital Versatile Disk)), a magneto-optical disk (including MD (Mini-Disk)), a semiconductor memory and the like, but also formed by the ROM 502, the hard disk included in the storage section 513, or the like that has the program recorded thereon and which is distributed to the user in a state of being incorporated in the device proper in advance.

It is to be noted that the program executed by the computer may be a program executed in time series in the order described in the present specification, or may be a program executed in parallel or in necessary timing when a call is made, for example.

In addition, in the present specification, the steps describing the program recorded on the recording medium include not only processes carried out in time series in the described order but also processes carried out in parallel or individually and not necessarily in time series.

In addition, in the present specification, a system refers to an apparatus as a whole formed by a plurality of devices.

In addition, a constitution described above as one device (or one processing section) may be divided and formed as a plurality of devices (or processing sections). Conversely, constitutions described above as a plurality of devices (or processing sections) may be integrated into one device (one processing section). In addition, a constitution other than the above-described constitutions may be added to the constitution of each device (each processing section), of course. Further, a part of the constitution of a device (or a processing section) may be included in the constitution of another device (or another processing section) as long as the constitution and operation of the system as a whole are the same in effect. That is, embodiments of the present invention are not limited to the above-described embodiments, and are susceptible of various changes without departing from the spirit of the present invention.

Insofar as the embodiments of the invention described above are independent, at least in part, using software-controlled data processing apparatus, it will be appreciated that a computer program providing such software control and a transmission, storage or other medium by which such a computer program is provided are envisaged as aspects of the present invention.

The present application contains subject matter related to that disclosed in Japanese Priority Patent Application JP 2009-219628 filed in the Japan Patent Office on September 24, 2009, the entire content of which is hereby incorporated by reference.

It should be understood by those skilled in the art that various modifications, combinations, subcombinations and alterations may occur depending on design requirements and other factors insofar as they are within the scope of the appended claims or the equivalents thereof.

**Claims**

1. An image processing device comprising:

   selecting means for selecting coded data corresponding to coefficient data of a subband necessary to generate a decoded image of a predetermined resolution from coded data generated by coding a line block including a coefficient data group of each subband, the line block being generated by decomposing image data of a predetermined number of lines into each frequency band by hierarchical analysis filter processing and including at least one line or more of coefficient data of a subband of a lowest-frequency component;
   decoding means for decoding the coded data selected by said selecting means; and
   synthesis filter means for hierarchically performing synthesis filter processing, synthesizing said coefficient data obtained by decoding the coded data by said decoding means, and generating the decoded image of said predetermined resolution.

2. The image processing device according to claim 1, further comprising decrypting means for decrypting said coded data, wherein
   said selecting means divides said coded data into each piece of coded data corresponding to one line of said coefficient data in each layer on a basis of a result of decryption by said decrypting means, and selects coded data corresponding to coefficient data of a subband necessary to generate a decoded image of a predetermined resolution from the divided coded data.

3. The image processing device according to claim 2, wherein,
   said decrypting means extracts information on a code amount of coded data corresponding to one line of said coefficient data in each layer, the information being included in said coded data, by decrypting said coded data, and said selecting means divides said coded data into each piece of coded data corresponding to one line of said coefficient data in each layer on a basis of said code amount, and selects coded data corresponding to coefficient data of a subband necessary to generate a decoded image of a predetermined resolution from the divided coded data.

4. The image processing device according to claim 2, wherein,
   said decrypting means detects a marker indicating a boundary of coded data corresponding to one line of said coefficient data in each layer, the marker being included in said coded data, by decrypting said coded data, and said selecting means divides said coded data into each piece of coded data corresponding to one line of said coefficient data in each layer on a basis of a result of detection of said marker, and selects coded data corresponding to coefficient data of a subband necessary to generate a decoded image of a predetermined resolution from the divided coded data.

**5.** The image processing device according to one of the claims 1 to 4, further comprising coefficient data rearranging means for rearranging order of arrangement of said coefficient data obtained by decoding the coded data by said decoding means from order in which the coded data is decoded by said decoding means to order in which to subject the coefficient data to said synthesis filter processing, wherein

said synthesis filter means synthesizes said coefficient data of each subband, said coefficient data being rearranged by said coefficient data rearranging means, and generates the decoded image of said predetermined resolution.

**6.** The image processing device according to claim 1, wherein

said synthesis filter means performs said synthesis filter processing on coefficient data of a subband in a lower layer preferentially among layers in which said synthesis filter processing can be performed.

**7.** The image processing device according to one of the claims 1 to 6, wherein

said synthesis filter means performs said synthesis filter processing by using a lifting operation.

**8.** The image processing device according to claim 7, wherein

said synthesis filter means performs said lifting operation on a line block in an initial state after symmetrically extending necessary coefficient data, and performs said lifting operation on a line block in a steady state using a result of said lifting operation performed last time.

**9.** The image processing device according to claim 7 or 8, wherein

said synthesis filter means performs said lifting operation on said coefficient data in a horizontal direction, and then performs said lifting operation on said coefficient data in a vertical direction.

**10.** An image processing method comprising the steps of:

selecting means of an image processing device selecting coded data corresponding to coefficient data of a subband necessary to generate a decoded image of a predetermined resolution from coded data generated by coding a line block including a coefficient data group of each subband, the line block being generated by decomposing image data of a predetermined number of lines into each frequency band by hierarchical analysis filter processing and including at least one line or more of coefficient data of a subband of a lowest-frequency component;

decoding means of said image processing device decoding the selected coded data; and

synthesis filter means of said image processing device hierarchically performing synthesis filter processing, synthesizing said coefficient data obtained by decoding the coded data, and generating the decoded image of said predetermined resolution.

**11.** An image processing device comprising:

a selecting section configured to select coded data corresponding to coefficient data of a subband necessary to generate a decoded image of a predetermined resolution from coded data generated by coding a line block including a coefficient data group of each subband, the line block being generated by decomposing image data of a predetermined number of lines into each frequency band by hierarchical analysis filter processing and including at least one line or more of coefficient data of a subband of a lowest-frequency component;

a decoding section configured to decode the coded data selected by said selecting section; and

a synthesis filter section configured to hierarchically perform synthesis filter processing, synthesize said coefficient data obtained by decoding the coded data by said decoding section, and generate the decoded image of said predetermined resolution.

# FIG.1

EP 2 312 855 A2

# FIG.2

# FIG.3

INPUT

HIGH-FREQUENCY COMPONENT OUTPUT

LOW-FREQUENCY COMPONENT OUTPUT

$d_i^1 = d_i^0 - 1/2 \, (s_i^0 + s_{i+1}^0)$ : HIGH-FREQUENCY COMPONENT OUTPUT

$s_i^1 = s_i^0 + 1/4 \, (d_{i-1}^1 + d_i^1)$ : LOW-FREQUENCY COMPONENT OUTPUT

EP 2 312 855 A2

# F I G . 4

NUMBER OF INPUT LINES = EVEN NUMBER

# FIG.5

THREE LINES

ONE LINE

| 1LL | 1HL |
|-----|-----|
| 1LH | 1HH |

EP 2 312 855 A2

# FIG.6

THREE LINES
TWO LINES
TWO LINES

ONE LINE

1LL    1HL

1LH    1HH

EP 2 312 855 A2

# FIG.7

EP 2 312 855 A2

THREE LINES

| 1LL | 1HL |
|-----|-----|
| 1LH | 1HH |

ONE LINE

| 2LL | 2HL | |
|-----|-----|---|
| 2LH | 2HH | 1HL |
| 1LH | 1HH | |

# FIG.8

THREE LINES
TWO LINES
TWO LINES
TWO LINES
TWO LINES

ONE LINE

2LL    2HL

1HL

2LH    2HH

THREE LINES
TWO LINES

1LH    1HH

EP 2 312 855 A2

# F I G . 9

| | |
|---|---|
| 1LL | 1HH,1HL,1LH(LINE 1) |
| 1LL | 1HH,1HL,1LH(LINE 2) |
| 1LL | 1HH,1HL,1LH(LINE 3) |
| 2LL | 2HH,2HL,2LH(LINE 1) |
| 1LL | 1HH,1HL,1LH(LINE 4) |
| 1LL | 1HH,1HL,1LH(LINE 5) |
| 2LL | 2HH,2HL,2LH(LINE 2) |
| 1LL | 1HH,1HL,1LH(LINE 6) |
| 1LL | 1HH,1HL,1LH(LINE 7) |
| 2LL | 2HH,2HL,2LH(LINE 3) |
| 3LL | 3HH,3HL,3LH(LINE 1) |
| 1LL | 1HH,1HL,1LH(LINE 8) |
| 1LL | 1HH,1HL,1LH(LINE 9) |
| 2LL | 2HH,2HL,2LH(LINE 4) |
| 1LL | 1HH,1HL,1LH(LINE 10) |
| 1LL | 1HH,1HL,1LH(LINE 11) |
| 2LL | 2HH,2HL,2LH(LINE 5) |
| 3LL | 3HH,3HL,3LH(LINE 2) |
| 1LL | 1HH,1HL,1LH(LINE 12) |
| 1LL | 1HH,1HL,1LH(LINE 13) |
| 2LL | 2HH,2HL,2LH(LINE 6) |
| 1LL | 1HH,1HL,1LH(LINE 14) |
| 1LL | 1HH,1HL,1LH(LINE 15) |
| 2LL | 2HH,2HL,2LH(LINE 7) |
| 2LL | |
| 3LL | 3HH,3HL,3LH(LINE 3) |
| | 4HH,4HL,4LH,4LL(LINE 1) |

# FIG.10

| | |
|---|---|
| 1LL | 1HH,1HL,1LH(LINE L) |
| 1LL | 1HH,1HL,1LH(LINE L+1) |
| | 2HH,2HL,2LH(LINE M) |
| 1LL | 1HH,1HL,1LH(LINE L+2) |
| 1LL | 1HH,1HL,1LH(LINE L+3) |
| 2LL | 2HH,2HL,2LH(LINE M+1) |
| 3LL | 3HH,3HL,3LH(LINE N) |
| 1LL | 1HH,1HL,1LH(LINE L+4) |
| 1LL | 1HH,1HL,1LH(LINE L+5) |
| 2LL | 2HH,2HL,2LH(LINE M+2) |
| 1LL | 1HH,1HL,1LH(LINE L+6) |
| 1LL | 1HH,1HL,1LH(LINE L+7) |
| 2LL | 2HH,2HL,2LH(LINE M+3) |
| 3LL | 3HH,3HL,3LH(LINE N+1) |
| | 4HH,4HL,4LH,4LL(LINE P) |

# FIG.11

| |
|---|
| 1HH,1HL,1LH(LINE L) |
| 1HH,1HL,1LH(LINE L+1) |
| 2HH,2HL,2LH(LINE M) |
| 1HH,1HL,1LH(LINE L+2) |
| 1HH,1HL,1LH(LINE L+3) |
| 2HH,2HL,2LH(LINE M+1) |
| 3HH,3HL,3LH(LINE N) |
| 1HH,1HL,1LH(LINE L+4) |
| 1HH,1HL,1LH(LINE L+5) |
| 2HH,2HL,2LH(LINE M+2) |
| 1HH,1HL,1LH(LINE L+6) |
| 1HH,1HL,1LH(LINE L+7) |
| 2HH,2HL,2LH(LINE M+3) |
| 3HH,3HL,3LH(LINE N+1) |
| 4HH,4HL,4LH,4LL(LINE P) |

$\Rightarrow$

| |
|---|
| 4HH,4HL,4LH,4LL(LINE P) |
| 3HH,3HL,3LH(LINE N) |
| 2HH,2HL,2LH(LINE M) |
| 1HH,1HL,1LH(LINE L) |
| 1HH,1HL,1LH(LINE L+1) |
| 2HH,2HL,2LH(LINE M+1) |
| 1HH,1HL,1LH(LINE L+2) |
| 1HH,1HL,1LH(LINE L+3) |
| 3HH,3HL,3LH(LINE N+1) |
| 2HH,2HL,2LH(LINE M+2) |
| 1HH,1HL,1LH(LINE L+4) |
| 1HH,1HL,1LH(LINE L+5) |
| 2HH,2HL,2LH(LINE M+3) |
| 1HH,1HL,1LH(LINE L+6) |
| 1HH,1HL,1LH(LINE L+7) |

EP 2 312 855 A2

# FIG.12

| HEADER INFORMATION | CODEWORD |
|---|---|
| | CODE AMOUNT (100 BYTES) |
| Code_info(P) | 4HH,4HL,4LH,4LL(LINE P) |
| Code_info(N) | 3HH,3HL,3LH(LINE N) |
| Code_info(M) | 2HH,2HL,2LH(LINE M) |
| Code_info(L) | 1HH,1HL,1LH(LINE L) |
| Code_info(L+1) | 1HH,1HL,1LH(LINE L+1) |
| Code_info(M+1) | 2HH,2HL,2LH(LINE M+1) |
| Code_info(L+2) | 1HH,1HL,1LH(LINE L+2) |
| Code_info(L+3) | 1HH,1HL,1LH(LINE L+3) |
| Code_info(N+1) | 3HH,3HL,3LH(LINE N+1) |
| Code_info(M+2) | 2HH,2HL,2LH(LINE M+2) |
| Code_info(L+4) | 1HH,1HL,1LH(LINE L+4) |
| Code_info(L+5) | 1HH,1HL,1LH(LINE L+5) |
| Code_info(M+3) | 2HH,2HL,2LH(LINE M+3) |
| Code_info(L+6) | 1HH,1HL,1LH(LINE L+6) |
| Code_info(L+7) | 1HH,1HL,1LH(LINE L+7) |

# FIG.13

```
        ( START CODING PROCESS )
                    │
                    ▼
        ┌───────────────────────────┐
        │ PERFORM WAVELET TRANSFORM │ S101
        │ WHILE INPUTTING LINES     │
        └───────────────────────────┘
                    │
                    ▼
  NO    < HAS PROCESS FOR ONE LINE    > S102
◄───────  BLOCK BEEN PERFORMED ?
                    │ YES
                    ▼
        ┌───────────────────────────┐
        │ REARRANGE COEFFICIENT DATA│ S103
        └───────────────────────────┘
                    │
                    ▼
        ┌───────────────────────────┐
        │ PERFORM QUANTIZATION      │ S104
        └───────────────────────────┘
                    │
                    ▼
        ┌───────────────────────────┐
        │ PERFORM ENTROPY CODING IN EACH LINE │ S105
        └───────────────────────────┘
                    │
                    ▼
        ┌───────────────────────────┐
        │ ADD CODE AMOUNT TO EACH LINE │ S106
        └───────────────────────────┘
                    │
                    ▼
        ┌───────────────────────────┐
        │ OUTPUT CODED DATA         │ S107
        └───────────────────────────┘
                    │
                    ▼
        ┌───────────────────────────┐
        │ PERFORM RATE CONTROL      │ S108
        └───────────────────────────┘
                    │
                    ▼
  NO    < HAS PROCESS BEEN PERFORMED  > S109
◄───────  TO LAST LINE BLOCK ?
                    │ YES
                    ▼
                ( END )
```

FIG.14

SUBBAND AND LINE SELECTING SECTION (202)

CODEWORD DECRYPTING SECTION (201)

SELECTING BLOCK (211)

RETAINING BLOCK (212)

ENTROPY DECODING SECTION (203)

BUFFER SECTION (206)

DEQUANTIZING SECTION (204)

WAVELET INVERSE TRANSFORM SECTION (205)

D51, D52, D53, D54, D55, D56, D57, D58, D59, D60, D61, D62

200

EP 2 312 855 A2

# FIG.15

FIG.16A

| 4LL(LINE P) |
| --- |

FIG.16B

| 4HH,4HL,4LH,4LL(LINE P) |
| --- |

FIG.16C

| 4HH,4HL,4LH,4LL(LINE P) |
| --- |
| 3HH,3HL,3LH(LINE N) |
| 3HH,3HL,3LH(LINE N+1) |

FIG.16D

| 4HH,4HL,4LH,4LL(LINE P) |
| --- |
| 3HH,3HL,3LH(LINE N) |
| 3HH,3HL,3LH(LINE N+1) |
| 2HH,2HL,2LH(LINE M) |
| 2HH,2HL,2LH(LINE M+1) |
| 2HH,2HL,2LH(LINE M+2) |
| 2HH,2HL,2LH(LINE M+3) |

FIG.16E

| 4HH,4HL,4LH,4LL(LINE P) |
| --- |
| 3HH,3HL,3LH(LINE N) |
| 3HH,3HL,3LH(LINE N+1) |
| 2HH,2HL,2LH(LINE M) |
| 2HH,2HL,2LH(LINE M+1) |
| 2HH,2HL,2LH(LINE M+2) |
| 2HH,2HL,2LH(LINE M+3) |
| 1HH,1HL,1LH(LINE L) |
| 1HH,1HL,1LH(LINE L+1) |
| 1HH,1HL,1LH(LINE L+2) |
| 1HH,1HL,1LH(LINE L+3) |
| 1HH,1HL,1LH(LINE L+4) |
| 1HH,1HL,1LH(LINE L+5) |
| 1HH,1HL,1LH(LINE L+6) |
| 1HH,1HL,1LH(LINE L+7) |

# FIG.17

NUMBER OF INPUT LINES = N = EVEN NUMBER

# FIG.18

# FIG.19

FIG.20A

281

FIG.20B

282

FIG.20C

283

284

285

286

287

# FIG.21

```
( START DECODING PROCESS )
        │
        ▼
┌────────────────────────────────────┐
│ INPUT CODED DATA OF ONE LINE BLOCK │  S201
└────────────────────────────────────┘
        │
        ▼
┌────────────────────────────────────┐
│ DECRYPT CODEWORD, AND EXTRACT      │  S202
│ RELATED INFORMATION                │
└────────────────────────────────────┘
        │
        ▼
┌────────────────────────────────────┐
│ EXTRACT PROCESSING OBJECT LINE     │  S203
│ ON BASIS OF CODE AMOUNT            │
└────────────────────────────────────┘
        │
        ▼
   IS PROCESSING OBJECT LINE            S204
   SELECTION OBJECT LINE ?          NO
        │ YES
        ▼
┌────────────────────────────────────┐
│ RETAIN PROCESSING OBJECT LINE      │  S205
└────────────────────────────────────┘
        │
        ▼
NO   HAS ONE LINE BLOCK BEEN PROCESSED ?   S206
        │ YES
        ▼
┌────────────────────────────────────┐
│ ENTROPY-DECODE PROCESSING OBJECT LINE │ S207
└────────────────────────────────────┘
        │
        ▼
┌────────────────────────────────────┐
│ DEQUANTIZE COEFFICIENT DATA        │  S208
└────────────────────────────────────┘
        │
        ▼
┌────────────────────────────────────┐
│ SUBJECT COEFFICIENT DATA TO        │  S209
│ WAVELET INVERSE TRANSFORM          │
└────────────────────────────────────┘
        │
        ▼
NO   HAS PROCESS BEEN PERFORMED            S210
     TO LAST LINE BLOCK ?
        │ YES
        ▼
      ( END )
```

# FIG.22

| | | CODEWORD |
|---|---|---|
| 291 | M | 4HH,4HL,4LH,4LL(LINE P) |
| | M | 3HH,3HL,3LH(LINE N) |
| | M | 2HH,2HL,2LH(LINE M) |
| | M | 1HH,1HL,1LH(LINE L) |
| | M | 1HH,1HL,1LH(LINE L+1) |
| | M | 2HH,2HL,2LH(LINE M+1) |
| | M | 1HH,1HL,1LH(LINE L+2) |
| | M | 1HH,1HL,1LH(LINE L+3) |
| | M | 3HH,3HL,3LH(LINE N+1) |
| | M | 2HH,2HL,2LH(LINE M+2) |
| | M | 1HH,1HL,1LH(LINE L+4) |
| | M | 1HH,1HL,1LH(LINE L+5) |
| | M | 2HH,2HL,2LH(LINE M+3) |
| | M | 1HH,1HL,1LH(LINE L+6) |
| | M | 1HH,1HL,1LH(LINE L+7) |

**FIG.23**

EP 2 312 855 A2

# FIG.24A

| |
|---|
| 4HH,4HL,4LH,4LL(LINE P) |
| 3HH,3HL,3LH(LINE N) |
| 3HH,3HL,3LH(LINE N+1) |
| 2HH,2HL,2LH(LINE M) |
| 2HH,2HL,2LH(LINE M+1) |
| 2HH,2HL,2LH(LINE M+2) |
| 2HH,2HL,2LH(LINE M+3) |
| 1HH,1HL,1LH(LINE L) |
| 1HH,1HL,1LH(LINE L+1) |
| 1HH,1HL,1LH(LINE L+2) |
| 1HH,1HL,1LH(LINE L+3) |
| 1HH,1HL,1LH(LINE L+4) |
| 1HH,1HL,1LH(LINE L+5) |
| 1HH,1HL,1LH(LINE L+6) |
| 1HH,1HL,1LH(LINE L+7) |

# FIG.24B

| |
|---|
| 1HH,1HL,1LH(LINE L) |
| 1HH,1HL,1LH(LINE L+1) |
| 1HH,1HL,1LH(LINE L+2) |
| 1HH,1HL,1LH(LINE L+3) |
| 1HH,1HL,1LH(LINE L+4) |
| 1HH,1HL,1LH(LINE L+5) |
| 1HH,1HL,1LH(LINE L+6) |
| 1HH,1HL,1LH(LINE L+7) |
| 2HH,2HL,2LH(LINE M) |
| 2HH,2HL,2LH(LINE M+1) |
| 2HH,2HL,2LH(LINE M+2) |
| 2HH,2HL,2LH(LINE M+3) |
| 3HH,3HL,3LH(LINE N) |
| 3HH,3HL,3LH(LINE N+1) |
| 4HH,4HL,4LH,4LL(LINE P) |

EP 2 312 855 A2

FIG.25A

| |
|---|
| 1HH,1HL,1LH(LINE L) |
| 1HH,1HL,1LH(LINE L+1) |
| 2HH,2HL,2LH(LINE M) |
| 1HH,1HL,1LH(LINE L+2) |
| 1HH,1HL,1LH(LINE L+3) |
| 2HH,2HL,2LH(LINE M+1) |
| 3HH,3HL,3LH(LINE N) |
| 1HH,1HL,1LH(LINE L+4) |
| 1HH,1HL,1LH(LINE L+5) |
| 2HH,2HL,2LH(LINE M+2) |
| 1HH,1HL,1LH(LINE L+6) |
| 1HH,1HL,1LH(LINE L+7) |
| 2HH,2HL,2LH(LINE M+3) |
| 3HH,3HL,3LH(LINE N+1) |
| 4HH,4HL,4LH,4LL(LINE P) |

FIG.25B

| |
|---|
| 4HH,4HL,4LH,4LL(LINE P) |
| 3HH,3HL,3LH(LINE N) |
| 2HH,2HL,2LH(LINE M) |
| 1HH,1HL,1LH(LINE L) |
| 1HH,1HL,1LH(LINE L+1) |
| 2HH,2HL,2LH(LINE M+1) |
| 1HH,1HL,1LH(LINE L+2) |
| 1HH,1HL,1LH(LINE L+3) |
| 3HH,3HL,3LH(LINE N+1) |
| 2HH,2HL,2LH(LINE M+2) |
| 1HH,1HL,1LH(LINE L+4) |
| 1HH,1HL,1LH(LINE L+5) |
| 2HH,2HL,2LH(LINE M+3) |
| 1HH,1HL,1LH(LINE L+6) |
| 1HH,1HL,1LH(LINE L+7) |

# FIG.26

START DECODING PROCESS

INPUT CODED DATA OF ONE LINE BLOCK — S301

DECRYPT CODEWORD, AND EXTRACT RELATED INFORMATION — S302

EXTRACT PROCESSING OBJECT LINE ON BASIS OF CODE AMOUNT — S303

IS PROCESSING OBJECT LINE SELECTION OBJECT LINE ? — S304 / NO

YES

RETAIN PROCESSING OBJECT LINE — S305

HAS ONE LINE BLOCK BEEN PROCESSED ? — S306 / NO

YES

ENTROPY-DECODE PROCESSING OBJECT LINE — S307

REARRANGE COEFFICIENT DATA IN ORDER OF WAVELET INVERSE TRANSFORM — S308

DEQUANTIZE COEFFICIENT DATA — S309

SUBJECT COEFFICIENT DATA TO WAVELET INVERSE TRANSFORM — S310

HAS PROCESS BEEN PERFORMED TO LAST LINE BLOCK ? — S311 / NO

YES

END

# FIG.27

# FIG.28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007311924 A

- JP 2009219628 A